(19) Europäisches Patentamt
European Patent Office
Office européen des brevets

(11) EP 2 046 904 B1

(12) **FASCICULE DE BREVET EUROPEEN**

(45) Date de publication et mention de la délivrance du brevet:
**27.09.2017 Bulletin 2017/39**

(21) Numéro de dépôt: **07731173.6**

(22) Date de dépôt: **22.03.2007**

(51) Int Cl.:
***C09D 175/04*** (2006.01) ***C08L 75/04*** (2006.01)

(86) Numéro de dépôt international:
**PCT/FR2007/000484**

(87) Numéro de publication internationale:
**WO 2007/122309 (01.11.2007 Gazette 2007/44)**

(54) **COMPOSITION POLYISOCYANATE A PROPRIETES ANTI-CHOCS AMÉLIORÉES**

POLYISOCYANATZUSAMMENSETZUNG MIT VERBESSERTEN STOSSICHERUNGSEIGENSCHAFTEN

POLYISOCYANATE COMPOSITION WITH IMPROVED ANTI-SHOCK PROPERTIES

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **24.03.2006 FR 0602577**

(43) Date de publication de la demande:
**15.04.2009 Bulletin 2009/16**

(73) Titulaire: **Vencorex France**
**69800 Saint-Priest (FR)**

(72) Inventeurs:
- **BERNARD, Jean-marie**
**F-69440 Saint Laurent D'agny (FR)**
- **DUBECQ, Mathias**
**F-69007 Lyon (FR)**

(74) Mandataire: **Dennemeyer & Associates S.A.**
**Landaubogen 1-3**
**81373 München (DE)**

(56) Documents cités:
**EP-A- 1 106 636**
**EP-A1- 0 798 299**
**EP-A1- 1 340 483**
**WO-A-94/13712**
**GB-A- 974 900**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 046 904 B1

## Description

La présente invention a pour objet l'utilisation de compositions polyisocyanates pour la réalisation de revêtements, et en particulier de peintures ou vernis, notamment pour pièces de carrosserie automobile.

Les domaines d'application dans lesquels interviennent des revêtements sont d'une très grande diversité et requièrent de plus en plus des compositions de très haute technicité, possédant d'excellentes qualités, tant sur le plan de l'application du revêtement que sur les caractéristiques du produit fini.

Il est sans cesse demandé des revêtements possédant des propriétés améliorées, en particulier possédant une vitesse de séchage accrue, une plus grande résistance aux impacts et aux chocs et un comportement amélioré vis-à-vis des agressions chimiques de toutes sortes, organiques, microbiennes ou atmosphériques, ainsi qu'une résistance améliorée aux lavages sous pression, en particulier pour les substrats en matières plastiques.

Il existe par exemple, pour l'industrie automobile, une forte demande pour des compositions de revêtement présentant d'excellentes propriétés de résistance aux chocs, en particulier de résistance au gravillonnage, en particulier pour les compositions de revêtement destinées à la première monte, c'est-à-dire comme revêtement primaire de carrosserie, comme revêtement de base ou encore comme « top coat » (ou couche de finition).

On connaît déjà des formulations mono-composantes (1K) de revêtement à base de polyisocyanates bloqués, par exemple pour l'OEM (« Original Manufacturing Equipment », ou « première monte »), et pour le laquage en bande en continu ou en discontinu (respectivement « coil coating » et « can coating » en langue anglaise). Les polyisocyanates bloqués confèrent généralement aux substrats ainsi revêtus des propriétés physico-chimiques tout à fait acceptables, et répondent le plus souvent aux exigences en terme d'aspect et de performances pour les formulateurs, même si les moyens d'application sont différents dans les domaines considérés.

On connaît également des formulations aqueuses pour revêtement, à base de polyisocyanates. Cependant, ce type de formulation aqueuse n'est que peu adapté aux moyens techniques de revêtement utilisés aujourd'hui, en particulier dans le domaine automobile.

Les revêtements obtenus avec ces formulations aqueuses connues présentent en général soit une caractéristique de « dureté » acceptable et nécessaire pour l'utilisation considérée, soit une caractéristique d' « élasticité », indispensable pour une bonne résistance au gravillonnage. Il reste que des formulations pour revêtement qui puissent allier « dureté » et « élasticité » font encore défaut, notamment dans les domaines automobile et aéronautique, où des revêtements performants, durables, et résistants aux chocs, de type gravillonnage en particulier, sont requis, notamment dans le cas de revêtements comprenant une résine aminoplast.

Ainsi, un premier objectif de la présente invention consiste à fournir une composition de revêtement possédant des propriétés de dureté et d'élasticité améliorées par rapport aux compositions de revêtement connues dans le domaine.

Un autre objectif de la présente invention consiste à fournir une composition de revêtement possédant des propriétés de dureté et d'élasticité améliorées, comme revêtement de première monte.

Un autre objectif de l'invention consiste à fournir une composition non aqueuse de revêtement possédant des propriétés de dureté et d'élasticité améliorées, comme revêtement de première monte.

L'invention a également pour objectif de proposer une composition non aqueuse de revêtement possédant des propriétés de dureté et d'élasticité améliorées, comme revêtement de première monte, utilisable dans les domaines automobile, aéronautique et ferroviaire.

D'autres objectifs encore apparaîtront dans l'exposé de l'invention qui suit.

Ainsi, la présente invention concerne tout d'abord l'utilisation d'une composition comprenant :

a) au moins un polyisocyanate comportant au moins un motif dimère et au moins un polyisocyanate, identique ou différent du précédent, comportant au moins un motif iminotriazinedione, le(s)dit(s) polyisocyanates présentant l'une et/ou l'autre, de préférence les deux caractéristiques suivantes :- le ratio molaire (fonctions isocyanates/motifs iminotriazinedione) avant masquage est inférieur à 100, de préférence inférieur à 90; et/ou le ratio molaire (motifs iminotriazinedione /motifs trimères) est supérieur à 3 ;

b) au moins un composé porteur d'au moins une fonction à hydrogène mobile choisie parmi les fonctions hydroxyles primaires ou secondaires, phénols, amines primaires et/ou secondaires, carboxyliques et fonction SH, et

c) au moins une résine aminoplastique (résine « aminoplast ») de type mélamine-aldéhyde, en particulier mélamine-formaldéhyde et/ou urée-aldéhyde, en particulier urée-formaldéhyde, ou benzoguanamine et/ou leurs dérivés alkoxyalkyles,

pour l'élaboration d'un revêtement par réticulation par traitement thermique.

Pour l'utilisation précitée, la composition peut également contenir :

d) au moins un catalyseur de la réaction du composé a) avec le composé c), et/ou au moins un composé de type acide fort, ou une forme latente dudit acide fort, par exemple un sel d'amine tertiaire, en tant que catalyseur de la

réaction des composés mélamines et/ou urées ou de leurs dérivés avec les fonctions carbamate vrai (-O-(C=O)-$NH_2$) et/ou les fonctions uréthane (-O-(C=O)-NH-).

Par « acide fort », on entend un acide dont le $pK_A$ dans l'eau est inférieur à 4. Des exemples de tels acides forts sont l'acide *para*-toluène-sulfonique, les acides phosphoriques et leurs mono- ou di-esters. De manière générale, ces acides forts sont bien connus de l'homme du métier en tant que systèmes catalytiques pour la réticulation des mélamines.

La composition pour revêtement définie *supra* comprend en outre éventuellement un ou plusieurs pigments et/ou additifs facilitant la mise en oeuvre de la formulation ou la formation des revêtements. Ceux-ci sont notamment choisis parmi additifs de rhéologie, d'étalement, tensio-actifs et autres, et leurs mélanges.

Le revêtement obtenu par utilisation de la composition définie précédemment présente un bel aspect et possède de bonnes propriétés mécaniques et tout particulièrement une résistance améliorée en termes de dureté, une résistance au gravillonnage et une bonne résistance aux diverses attaques chimiques et/ou biologiques.

La présente invention permet en outre d'obtenir un très bon compromis entre élasticité et dureté, compromis particulièrement recherché dans le domaine automobile ou aéronautique.

Ces propriétés améliorées sont obtenues en particulier lorsque la composition est utilisée comme durcisseur de la couche « primaire » d'un revêtement (« apprêt »). Par couche « primaire », on entend, dans le cas de substrats métalliques et notamment de pièces automobiles, la couche appliquée directement sur la couche de cataphorèse qui est réticulée par traitement thermique.

La réticulation est généralement obtenue par traitement thermique du substrat revêtu. D'autres traitements sont envisageables, mais le traitement thermique est préféré. Par traitement thermique, on entend en règle générale un passage, ou un séjour, du substrat revêtu, dans un four, à une température élevée, c'est-à-dire supérieure à 60°C, notamment supérieure à 80 °C, avantageusement supérieure à 100°C, pendant une durée suffisante pour permettre une réticulation de la formulation de revêtement.

Comme indiqué ci-dessus, d'autres moyens de chauffage peuvent être envisagés, comme par exemple les pistolets chauffants autorisant le chauffage d'une partie seulement du substrat, ou encore le chauffage par rayonnement infra-rouge.

Une température de réticulation inférieure à 60°C est envisageable, la durée de réticulation étant alors plus longue. À l'inverse, une réticulation effectuée à une température voisine à 300°C ne prendra que quelques dizaines de secondes, voire quelques secondes ; on parle alors de cuisson « flash ».

Selon un mode de réalisation tout particulièrement préféré, la réticulation de la composition de polyisocyanates selon la présente invention est généralement effectuée à une température comprise entre 60°C et 300°C, de préference supérieure à 80°C et inférieure à 300°C, avantageusement entre 100 et 200 °C pendant une durée comprise entre quelques secondes et quelques heures.

En général, sur la couche « primaire », est ensuite généralement déposée une couche dite de base, selon la technique dite mouillé-sur-mouillé (« wet-on-wet »), puis une couche de vernis finale, dénommée « clear coat ».

Il doit être compris que le terme « revêtement » employé ici comprend une ou plusieurs des différentes couches précitées, généralement au moins trois couches, dont au moins une couche, de préference la couche de primaire, est une composition selon l'invention. La présente invention ne saurait toutefois se limiter à l'utilisation de la formulation de revêtement pour réaliser une couche de primaire.

Il s'ensuit que les propriétés obtenues concernent l'ensemble du revêtement constitué des différentes couches. En particulier, les propriétés de résistance au gravillonnage sont mesurées sur le revêtement global, mono- ou multi-couches.

L'utilisation formant un des objets de la présente invention est particulièrement bien adaptée dans le domaine des peintures industrielles à base polyuréthanes première monte (OEM) pour lesquels les revêtements obtenus présentent, entre autres, une dureté et une résistance au gravillonnage améliorées.

De manière surprenante, il est constaté que certaines des compositions envisagées dans l'invention permettent de conserver, voire d'améliorer, cette dernière propriété de résistance au gravillonnage, lors d'opérations de retouche du revêtement pour défaut d'aspect.

Cette opération de retouche se caractérise par une deuxième application de la base et du vernis sur le revêtement défectueux suivie d'une réticulation par une nouvelle cuisson au four. Généralement, cette opération de retouche entraîne une dégradation de la propriété anti-gravillonnage du revêtement final. Les compositions utilisées dans la présente invention permettent notamment de pallier ce problème.

Conserver cette propriété de résistance au gravillonnage lors des retouches est particulièrement demandé par les industriels de la peinture automobile.

Par résistance élevée au gravillonnage, ou plus simplement propriétés « anti-gravillonnage », on entend la propriété des revêtements à résister à des impacts multiples causés par des objets durs, notamment des objets de petite taille plus ou moins sphériques, et avec une fréquence élevée, venant heurter la surface du substrat revêtu, à des

vitesses plus ou moins importantes, en faisant avec ladite surface des angles variés, reproduisant les conditions d'impact d'une carrosserie d'un véhicule avec les gravillons du revêtement routier.

Les compositions utilisées comme revêtements au sens de la présente invention permettent en outre d'obtenir des résistances particulièrement adaptées aux diverses attaques d'origine chimique, comme les solvants par exemple, et/ou d'origine biologique, telles que les déjections animales, en particulier les fientes d'oiseaux.

Parmi les propriétés recherchées pour des revêtements, notamment de type peintures, en particulier pour des pièces de carrosserie notamment automobile, figurent une dureté élevée, une bonne adhérence au substrat, une résistance élevée aux attaques chimiques, une bonne résistance aux ultraviolets, une brillance élevée, une bonne rétention de la couleur, une résistance élevée au choc, ainsi que de bonnes propriétés d'adhésion, notamment sur substrat plastique.

De bonnes propriétés « anti-gravillonnage » sont particulièrement recherchées pour les substrats soumis à des chocs répétés, en particulier les pièces de carrosserie automobile, et en particulier les pièces situées sur la face avant du véhicule.

Il a maintenant été découvert de manière surprenante que des variations sur les polyisocyanates, sur les composants réagissant avec les polyisocyanates par réticulation, typiquement un polyol, ou encore sur d'autres composants présents dans la formulation de peinture permettent d'améliorer ces propriétés de manière très sensible.

Dans le cadre de la présente invention, l'utilisation de la composition selon l'invention permet la préparation d'un revêtement sous l'aspect d'une formulation monocomposant (1K), ou bien d'une formulation bi-composant (2K) ou encore multi-composants. Chacune de ces formulations peut se présenter sous forme non aqueuse, de type formulation solvantée (avec solvant) voire hydro-organique (eau + solvant).

Selon un mode de réalisation avantageux de la présente invention, lorsque la formulation utilisée se présente sous forme monocomposant (1K), le (ou les) polyisocyanate(s) de la composition se présente(nt) sous forme au moins partiellement, voire totalement masquée. Dans le cas de formulations bi- ou multi-composants, le (ou les) polyisocyanate(s) peuve(nt) se présenter également sous forme au moins partiellement, voire totalement masquée, bien que ceci ne constitue pas un aspect préféré de la présente invention.

Il a également été découvert que l'ajout de composé(s) tensio-actif(s) à cette formulation pour revêtement peut permettre d'améliorer encore les propriétés de résistance aux chocs et d'optimiser le compromis dureté / élasticité, et en particulier la résistance au gravillonnage.

Bien souvent, les revêtements, obtenus à partir de compositions contenant les durcisseurs polyisocyanates masqués connus qui subissent l'opération de retouche, deviennent beaucoup plus cassants, ce qui entraîne une perte importante de la propriété anti-gravillonnage et une diminution du compromis dureté - élasticité. Ceci est d'autant plus marqué pour les formulations de revêtement, en particulier, les formulations 1K, contenant des résines aminoplastiques, encore appelées résines « aminoplast », (de type mélamine-formol, urée-formol ou benzoguanamine-formol) qui amplifient encore le caractère dur, voire cassant des revêtements, surtout après lesdites opérations de retouche.

Il a été découvert de manière surprenante que les compositions polyisocyanates, notamment celles à base d'hexaméthylène di-isocyanate (HDI), à fonction isocyanate masquées et contenant au moins un polyisocyanate à teneur élevée en motifs urétidine-dione, encore appelé dimère vrai, sont particulièrement intéressantes comme durcisseurs de revêtement, en particulier lorsqu'elles se présentent en formulation 1K, pour première monte (OEM).

Des résultats tout à fait intéressants ont également été obtenus en utilisant des compositions dans lesquelles le (ou les) polyisocyanate(s) a (ont) une teneur élevée en motifs urétidine-dione et comporte(nt) des motifs iminotrimère.

En effet, de telles compositions améliorent de manière tout à fait inattendue les propriétés de dureté, de résistance chimiques et de résistance aux chocs, notamment la résistance au gravillonnage, et ce, même pour des compositions de peinture contenant des résines aminoplast, en particulier les compositions de peintures 1K contenant des résines aminoplast.

Selon un autre aspect, la présente invention a également pour objet une composition comprenant :

a) au moins un polyisocyanate comportant au moins un motif dimère et au moins un polyisocyanate, identique ou différent du précédent, comportant au moins un motif iminotriazinedione, le(s)dit(s) polyisocyanates présentant l'une et/ou l'autre, de préférence les deux caractéristiques suivantes :

- le ratio molaire (fonctions isocyanates/motifs iminotriazinedione) avant masquage est inférieur à 100, de préférence inférieur à 90 ; et/ou
- le ratio molaire (motifs iminotriazinedione/motifs trimères) est supérieur à 3 ;

b) au moins un composé porteur d'au moins une fonction à hydrogène mobile choisie parmi les fonctions hydroxyles primaires ou secondaires, phénols, amines primaires et/ou secondaires, carboxyliques et fonction SH, et

c) au moins une résine aminoplastique (résine « aminoplast ») de type mélamine-aldéhyde, en particulier mélamine-formaldéhyde et/ou urée-aldéhyde, en particulier urée-formaldéhyde, ou benzoguanamine et/ou leurs dérivés alkoxyalkyles.

En outre, la composition selon la présente invention peut également contenir :

d) au moins un catalyseur de la réaction du composé a) avec le composé c), et/ou au moins un composé de type acide fort, ou une forme latente dudit acide fort, par exemple un sel d'amine tertiaire, en tant que catalyseur de la réaction des composés mélamines et/ou urées ou de leurs dérivés avec les fonctions carbamate vrai (-O-(C=O)-$NH_2$) et/ou les fonctions uréthane (-O-(C=O)-NH-).

La composition comprend en outre éventuellement un ou plusieurs pigments et/ou additifs facilitant la mise en oeuvre de la formulation ou la formation des revêtements, notamment choisis parmi additifs de rhéologie, d'étalement, tensio-actifs et autres, et leurs mélanges.

Ladite composition est susceptible d'être réticulée par traitement thermique, par exemple cuisson au four, à température élevée, de préférence supérieure à 100°C et inférieure à 300°C, pendant un temps suffisant (de quelques secondes à quelques heures en fonction de la température retenue) pour obtenir, après les opérations dites de retouche, un revêtement de bel aspect ayant des bonnes propriétés mécaniques et, tout particulièrement, une résistance améliorée de la dureté, une bonne résistance chimique et notamment une conservation de la propriété de résistance au gravillonnage.

Selon un mode de réalisation préféré de la présente invention, la composition décrite ci-dessus comprend généralement :

- de 5% à 20% en poids d'au moins un polyisocyanate, par rapport au poids total de la composition sans solvant (% sur sec) ;
- de 15% à 25% en poids d'au moins une résine aminoplast, par rapport au poids total de la composition sans solvant (% sur sec) ;
- de 55% à 80% en poids d'au moins un composé porteur d'au moins une fonction à hydrogène mobile choisie parmi les fonctions hydroxyles primaires ou secondaires, phénols, amines primaires, et/ou secondaires, carboxyliques et fonction SH, par rapport au poids total de la composition sans solvant (% sur sec) ; et
- de 35% à 55%, avantageusement environ 45% en poids, d'au moins un solvant organique, par rapport au poids total de la composition.

La quantité de catalyseur(s) de réaction présent(s) dans la composition de la présente invention est habituellement comprise entre 0% et 0,5% en poids par rapport au poids total de la composition sans solvant (% sur sec).

Le(s) polyisocyanate(s) défini(s) sous a) ci-dessus présente(nt), avant masquage éventuel, une fonctionnalité moyenne en fonctions isocyanate au moins égale à 2 et au plus égale à 10, de préférence supérieure à 2,5 et au plus égale à 8 avantageusement comprise entre 2,8 et 6,5.

Dans la présente description, la fonctionnalité est exprimée en masse, comme il est d'usage dans ce domaine, c'est-à-dire que l'on pondère la fonction de chaque élément au pourcentage de sa proportion massique.

Rappelons que selon la technique usuelle en la matière, les différents composants des fractions oligomériques sont identifiés par analyse structurales infra rouge, leurs répartitions et leurs fonctionnalités sont données et quantifiées en utilisant les bandes caractéristiques des composés polyisocyanates, à savoir les bandes des fonctions isocyanates, les bandes alkyles, les bandes CO de l'isocyanurate ainsi que de l'iminotrimère, et celles de l'urétidinedione. On obtient ainsi la répartition oligomérique pondérale correspondant à chaque synthèse exemplifiée. Une analyse similaire peut également être effectuée en utilisant la technique par Résonance Magnétique Nucléaire (RMN).

À chaque oligomère et à chaque fraction oligomérique correspond une fonctionnalité mesurée (par la teneur en fonction NCO), qui dans la cas des oligomères purs peut être comparée avec la fonctionnalité théorique (ainsi le dimère de HDI a une fonctionnalité de 2).

Pour mémoire, dans ce domaine technique, la fonctionnalité est obtenue en multipliant le pourcentage pondéral de chaque oligomère de la composition par sa fonctionnalité propre, puis on somme les fonctionnalités apportées par chaque oligomère. Le total représente la fonctionnalité moyenne de la composition oligomérique. Dans le cas de la présente invention, les compositions finales sont soumises à une séparation sur un ensemble de colonnes de perméation de gel vendues par la société Polymer Laboratories sous la marque PL Gel type mixte E.

Par ailleurs, il convient de rappeler également que la fonctionnalité moyenne en fonctions isocyanates f(iNCO) est définie par la formule suivante :

$$f(iNCO) = \frac{Mn \times [iNCO]}{42 \times 100}$$

où : Mn représente la masse moléculaire moyenne en nombre obtenue par perméation de gel et
[iNCO] représente la concentration en fonctions isocyanate en grammes pour 100 grammes.

Le titre NCO est mesuré, de manière habituelle, selon la norme AFNOR NF T 52-132 de septembre 1988 (parfois désignée par «méthode à la dibutylamine »).

Préférentiellement, la composition selon la présente invention comprend :

- au moins un polyisocyanate contenant une quantité pondérale en motifs dimères comprise entre 0,25% et 25%, de préférence entre 0,5% et 20% par rapport à la masse totale du (des) polyisocyanate(s), lesdits motifs dimères étant reliés à un ou plusieurs motifs isocyanurates par des chaînes hydrocarbonées, de préférence des chaînes alkyle ;
- au moins un polyisocyanate, identique ou différent du précédent, contenant au moins un motif iminotriazinedione;
- éventuellement au moins un polyisocyanate, identique ou différent des précédents, contenant un dimère vrai ;
- au moins un composé porteur de fonction à hydrogène mobile, telles que des fonctions hydroxyles, et/ou des fonctions amines primaires et/ou secondaires, et/ou des fonctions SH ;
- au moins un solvant organique ;
- au moins une résine aminoplast de type mélamine/formaldéhyde et/ou urée/formaldéhyde ou benzoguanamine et/ou leurs dérivés alkoxyalkyle ; et
- éventuellement au moins un catalyseur de réaction de polyuréthannes et/ou au moins un catalyseur acide fort de la réaction des composés mélamines et/ou urées ou de leurs dérivés avec les fonctions uréthannes ou carbamates vraies.

Par « motif dimère », on entend le motif urétidine-dione, de formule brute $C_2N_2O_2$ (masse molaire = 84) et dont la formule développée peut être schématisée comme suit :

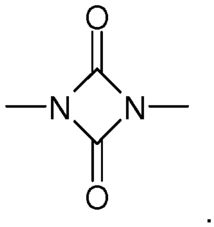

Par « dimère vrai », on entend le produit de cyclodimérisation de deux molécules de monomère(s) isocyanate, identiques ou différentes, chacune comportant de 2 à 5 fonctions isocyanate, ladite cyclodimérisation pouvant être schématisée comme suit :

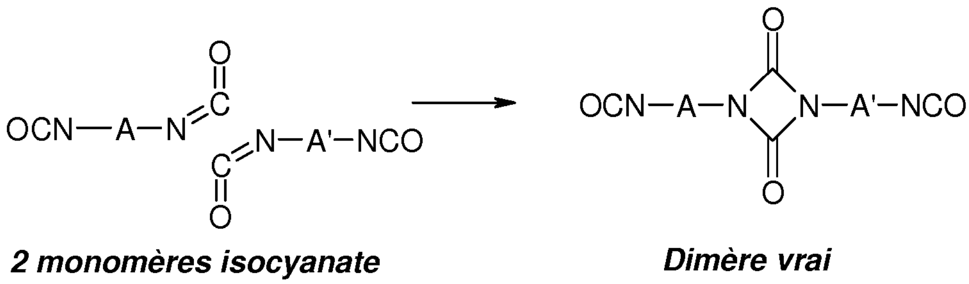


schéma dans lequel A et A', identiques ou différents, représentent chacun un radical bivalent linéaire, ramifié ou cyclique contenant de 1 à 20 atomes de carbone, de préférence, de 2 à 12 atomes de carbone, avantageusement de 2 à 8 atomes de carbone, par exemple 6 atomes de carbone et comportant en outre éventuellement 1, 2 ou 3 fonctions isocyanate.

Dans la composition isocyanate selon l'invention, les motifs dimères sont avantageusement reliés à un ou plusieurs motifs isocyanurates, notamment sous la forme d'enchaînements représentés par les formules (I) à (V) suivantes et leurs mélanges :

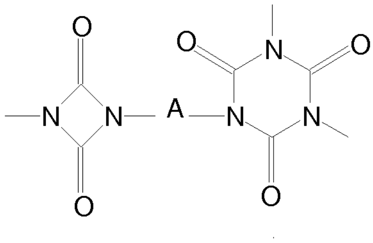

(I)

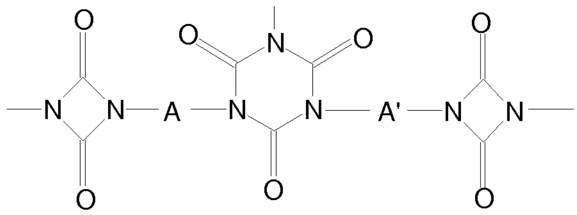

(II) ;

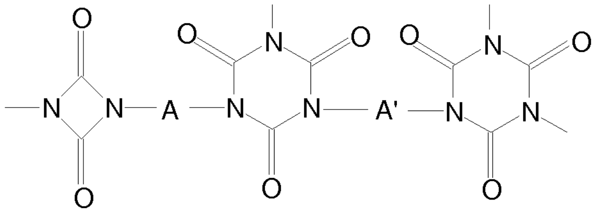

(III) ;

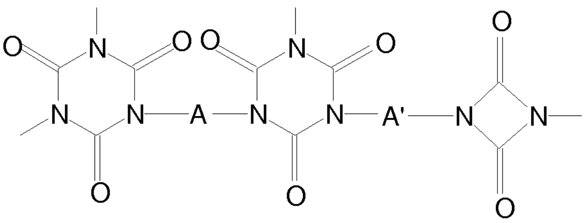

(IV) ;

et

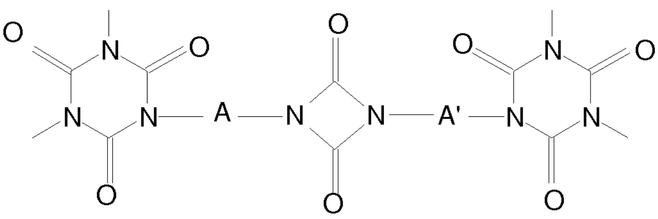

(V),

dans lesquels A et A' identiques ou différents représentent les restes d'un composé isocyanate monomère après enlèvement de deux fonctions isocyanates, et de préférence, A et A' représentent chacun un radical bivalent linéaire, ramifié ou cyclique contenant de 1 à 20 atomes de carbone, de préférence, de 2 à 12 atomes de carbone, avantageusement de 2 à 8 atomes de carbone, par exemple 6 atomes de carbone et comportant en outre éventuellement 1, 2 ou 3 fonctions isocyanate.

Ces enchaînements sont donnés à titre d'exemples illustratifs. D'autres enchaînements, non représentés ici, de motif(s) urétidine-dione et de motif(s) isocyanurate sont également compris dans le champ de la présente invention.

Parmi les compositions polyisocyanate de l'invention, celles contenant des motifs dimères reliés à des motifs isocyanurate par des chaînes hydrocarbonées, de préférence des chaînes alkyle, constituant préférentiellement des enchaînements « isocyanurate - motif dimère-isocyanurate » (formule (V) ci-dessus) se révèlent particulièrement intéressantes pour les opérations de retouche définies plus haut, mais aussi pour améliorer le ponçage ou la posabilité des revêtements.

De même, les motifs dimères peuvent être reliés à un ou plusieurs motifs iminotrimères, selon un ou plusieurs des enchaînements (I) à (V) définis ci-dessus, dans lesquels un ou plusieurs des motifs isocyanurates sont remplacés par des motifs iminotrimères.

La composition polyisocyanate définie sous a) précédemment, dont les fonctions isocyanate sont, selon un mode de réalisation préféré de la présente invention, totalement ou partiellement masquées, contient une teneur élevée en motifs dimères. Par « teneur élevée en motifs dimères », on entend une quantité pondérale en motif dimère comprise

entre 0,25% et 25%, de préférence entre 0,5% et 20% par rapport à la masse totale du (des) polyisocyanate(s).

En outre, comme indiqué *supra,* le(s) polyisocyanate(s) mis en oeuvre dans la composition de la présente invention, contien(nen)t au moins un motif iminotrimère. Au sens de la présente invention, un motif iminotrimère correspond au motif iminotriazinedione de formule brute $C_3N_4O_2$ (masse molaire = 124) et dont la formule développée peut être schématisée comme suit :

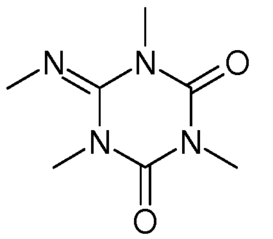
,

les atomes d'azote étant reliés aux restes des chaînes provenant des monomères diisocyanates de départ.

À titre d'exemple, et dans le cas de monomères hexaméthylène-diisocyanate (HDI) le cyclotrimère à motif iminotrimère peut être représenté par la formule suivante :

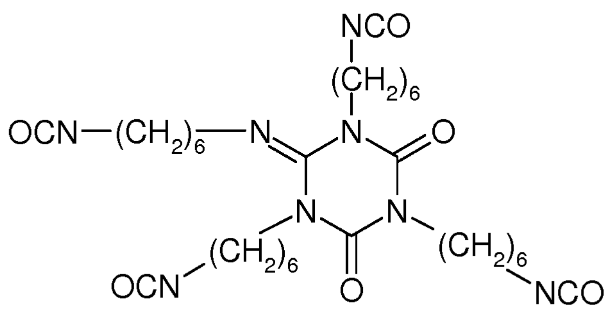
,

les fonctions isocyanates (NCO) en bout de chaînes pouvant être incorporées dans des cycles dimères ou trimères, dans le cas d'oligomères plus lourds.

De manière tout à fait préférée, les compositions de la présente invention se sont révélées tout à fait intéressantes pour les utilisations décrites ci-dessus, lorsque le(s) polyisocyanate(s) présent(s) dans lesdites compositions possèdent l'une des deux, de préférence les deux caractéristiques suivantes :

- le ratio molaire (fonctions isocyanates/motifs iminotrimères) avant masquage est inférieur à 100, de préférence inférieur à 90 ; et/ou
- le ratio molaire (motifs iminotrimères /motifs trimères) est supérieur à 3.

Les fonctions isocyanates présentes dans la composition selon l'invention sont de préférence au moins partiellement, voire totalement masquées. Lorsque lesdites fonctions isocyanates sont au moins partiellement ou totalement masquées, les ratios indiqués ci-dessus ne sont pas modifiés. En particulier, le masquage des fonctions isocyanates par les agents de masquage ne modifie en aucune façon le rapport (motifs iminotrimères/motifs trimères).

Les deux caractéristiques définies *supra* peuvent alors s'écrire :

- le ratio molaire [(fonctions isocyanates masquées + fonctions isocyanates libres)/motifs iminotrimères) est inférieur à 100, de préférence inférieur à 90 ; et/ou
- le ratio molaire (motifs iminotrimères /motifs trimères) est supérieur à 3.

Comme indiqué précédemment, la composition selon l'invention peut en outre comprendre des pigments ainsi que additifs qui facilitant la mise en oeuvre de la formulation ou la formation des revêtements, à savoir des additifs de rhéologie, d'étalement et autres.

Bien que cela ne soit pas préféré, la composition de la présente invention peut en outre comprendre un agent "tensio-actif", c'est-à-dire un composé possédant la propriété de rendre miscibles entre eux des composés hydrophobes et hydrophiles, sans pour autant signifier en aucune façon un composé susceptible de former une quelconque suspension

ou une quelconque émulsion.

À cet effet, il convient de noter que la composition pour revêtement selon l'invention, lorsqu'elle se présente sous forme 1K (monocomposant), est une solution, par opposition à émulsion, dispersion, latex ou autre, et plus précisément un mélange homogène d'au moins les composés définis *supra* sous a), b) et c), avec éventuellement d). Ceci signifie une présence d'eau très faible dans la composition de la présente invention, et notamment un ratio pondéral (eau) / [(poly)isocyanates + tensio-actif] compris entre 0 et 10%, de préférence entre 0 et 5%, avantageusement entre 0 et 1 %.

La composition peut également comprendre un agent tensio-actif ou un mélange d'agents tensio-actifs en une quantité généralement comprise entre 0% et 30% en poids, de préférence, entre 1% et 20% en poids, de préférence encore, entre 2% et 15% en poids.

Lorsque la composition de l'invention comprend un agent tensio-actif ou un mélange d'agents tensio-actifs, il est particulièrement avantageux d'utiliser un agent tensio-actif anionique ou encore un tensio-actif non ionique, comprenant éventuellement un fragment de chaîne polyéthylène glycol et/ou propylène glycol d'au moins 1, avantageusement d'au moins 5, de préférence d'au moins 7 unités éthylènyloxyle et/ou propylènyloxyle.

Avantageusement, le tensio-actif est choisi de manière qu'il ne comporte pas ou peu de fonction réactive avec le(s) polyisocyanate(s). Autrement dit, le tensio-actif est présent dans la composition solvantée sous forme essentiellement libre (par opposition à une forme liée par l'intermédiaire d'une liaison chimique avec le(s) polyisocyanate(s).

Par "forme essentiellement libre", on signifie que moins de 50 %, avantageusement moins de 20 %, de préférence moins de 10 % en masse de l'agent tensio-actif est sous forme liée.

Toutefois, les compositions sous forme de solution dans lesquelles le tensio-actif est totalement lié, de manière covalente, aux (poly)isocyanates, bien que ne constituant pas un mode de réalisation préféré, sont également comprises dans le champ de la présente invention.

Selon un mode de réalisation préféré, le tensio-actif est un agent anionique présentant au moins une fonction choisie parmi les sulfates ou phosphates d'aryle(s) et/ou d'alcoyle(s), et les aryl- ou alcoyl-phosphonates, -phosphinates et - sulfonates. Il est bien entendu que la composition sous forme de solution de la présente invention peut comprendre un mélange d'au moins deux tensio-actifs.

Le(s) polyisocyanate(s) compris dans la composition selon la présente invention consiste(nt) en tout isocyanate et/ou polyisocyanate, seul ou en mélange avec un ou plusieurs autres isocyanates et/ou polyisocyanates.

Les polyisocyanates préférés, entrant dans la composition de la présente invention et dont les fonctions isocyanate sont avantageusement bloquées au moins en partie ou en totalité par des agents masquants, sont choisis parmi les produits d'homo- ou d'hétéro-condensation d'alcoylènedi-isocyanate, et en particulier ceux décrits dans les demandes de brevets FR 2 822 828 et FR 2 837 820.

Ces polyisocyanates peuvent éventuellement comporter une ou plusieurs fonctions de type « biuret » et/ou de type « trimères », et par exemple et de manière non limitative, toute fonction de type, urée, uréthane, allophanate, ester, amide, acylurée, isocyanurate, oxadiazinetrione, immino-dimère, immino-trimère (imminotriazinedione), immino-oxadiazinedione (encore appelé trimère asymétrique), diazétidinedione (encore appelé dimère), et leurs mélanges.

Le(s) polyisocyanate(s) avantageusement à fonctions isocyanate totalement ou partiellement masquées peu(ven)t également comporter des fonctions carbamates vraies ($R-O-C(=O)-NH_2$) ou des fonctions époxy ou des fonctions carbonates de préférence cycliques, tels que décrits dans les demandes de brevets indiquées ci-dessus.

Les di-isocyanates monomères utilisés pour préparer les polyisocyanates définis précédemment sont généralement choisis parmi les di-isocyanates à caractère aliphatique et/ou cyclo-aliphatique et/ou, plus rarement, aromatique.

De manière générale, les polyisocyanates préférés sont les produits d'homo- ou d'hétéro-condensation des monomères isocyanates aliphatiques, cyclo-aliphatiques ou arylaliphatiques suivants :

- 1,6-hexaméthylène di-isocyanate,
- 1,12-dodécane di-isocyanate,
- cyclobutane-1,3-di-isocyanate,
- cyclohexane-1,3 et/ou 1,4-di-isocyanate,
- 1 -isocyanato-3,3,5-triméthyl-5-diisocyanatométhylcyclohexane (isophorone di-isocyanate, IPDI),
- les isocyanatométhyloctylènedi-isocyanates (TTI), notamment le 4-isocyanatométhyl-1,8-octylènedi-isocyanate,
- 2,4 et/ou 2,6-hexahydrotoluylène di-isocyanate ($H_6TDI$),
- hexahydro-1,3 et/ou 1,4-phénylène di-isocyanate,
- perhydro-2,4'- et/ou -4,4'-diphénylméthane di-isocyanate ($H_{12}MDI$), et en général les précurseurs aromatiques aminés ou les carbamates perhydrogénés,
- les bis-isocyanatométhylcyclohexane (notamment 1,3 et 1,4) (BIC),
- les bis-isocyanatométhylnorbornane (NBDI),
- 2-méthylpentaméthylène di-isocyanate (MPDI),
- les tétraméthylxylylène di-isocyanate (TMXDI), et

- le lysine di-isocyanate ainsi que les esters de la lysine di- ou tri-isocyanate (LDI ou LTI).

Les produits d'homo-condensation sont les produits issus de la condensation d'un des monomères di-isocyanates, listés ci-dessus, avec lui-même. Les produits d'hétéro-condensation sont les produits issus de la condensation de deux ou plusieurs des monomères listés ci-dessus, entre eux et/ou éventuellement avec un ou plusieurs composés à hydrogène mobile, tels que par exemple un alcool, un diol et autres composés analogues.

Il peut s'agir, par exemple, des polyisocyanates commercialisés par la Société Rhodia sous la dénomination "Tolonate®", notamment le "Tolonate® HDT", qui donne, après masquage par la méthyléthylcétoxime (MEKO), le "Tolonate® D2".

Les polyisocyanates compris dans la composition de la présente invention peuvent également être des dérivés polyisocyanates issus d'isocyanates aromatiques utilisés seuls ou en mélange avec des composés aliphatiques.

Toutefois l'utilisation de ces dérivés aromatiques est limitée en quantité, voire n'est pas préférée, car elle conduit généralement à des revêtements qui peuvent subir une coloration, en général un jaunissement, au cours du vieillissement, notamment si les revêtements sont fortement exposés aux rayonnements ultra violet, par exemple le rayonnement ultra violet solaire.

À titre d'exemples d'isocyanates aromatiques, on peut citer de manière non limitative :

- le 2,4- et/ou le 2,6-toluylène di-isocyanate (TDI),
- le diphénylméthane-2,4' et/ou 4,4'-di-isocyanate (MDI),
- le 1,3- et/ou le 1,4-phénylène di-isocyanate,
- le triphénylméthane-4,4',4"-triisocyanate, et
- les oligomères du MDI, ou TDI.

Des mélanges de ces polyisocyanates (cyclo)aliphatiques et/ou aromatiques peuvent aussi être utilisés.

La viscosité des composés polyisocyanates non masqués utiles à l'invention est située dans une plage de viscosité très large de par la structure des composés polyisocyanates qui peuvent être mis en jeu. La viscosité est généralement supérieure à 10 mPa•s, à 25°C à 100 % d'extrait sec, de préférence supérieure à 100 mPa•s, à 25°C et à 100 % d'extrait sec.

On peut citer à titre d'exemple la viscosité de produits de la société Rhodia, tels que le Tolonate® HDT LV2 qui présente une viscosité de l'ordre de 600 mPa•s $\pm$ 150 mPa•s à 25°C et qui contient une teneur en motifs dimère de l'ordre de 5 % en poids, ou encore le Tolonate® HDT HR de viscosité d'environ 20 000 mPa•s, à 25°C à 100% d'extrait sec, ou 2 000 mPa•s à 25°C à 90% d'extrait sec dans l'acétate de n-butyle et qui contient une teneur en motif dimère de l'ordre de 3 % en poids.

Certains composés polyisocyanates sont des solides à 100 % d'extrait sec. C'est par exemple le cas du trimère isocyanurate de l'IPDI ou du dimère de l'IPDI. À titre d'exemple, on peut donner les viscosités de certains de ces composés en solution organique; ainsi le Tolonate® IDT 70 S (trimère isocyanurate de l'IPDI) présente une viscosité de l'ordre de 1 700 mPa•s $\pm$ 600 mPa•s à 25°C pour une formulation à 70 % d'extrait sec dans le Solvesso® 100, le Tolonate® IDT 70 B (trimère isocyanurate de l'IPDI) présente une viscosité de l'ordre de 600 mPa•s $\pm$ 300 mPa•s à 25°C pour une formulation à 70 % d'extrait sec dans l'acétate de n-butyle.

Compte tenu de leur aptitude à conférer aux revêtements une résistance élevée au gravillonnage, sont préférés les produits d'homo-condensation et/ou d'hétéro-condensation à partir d'un monomère di-isocyanate aliphatique, en particulier non cyclique, de préférence le HDI.

Par ailleurs, lorsque le nombre d'enchaînements entre motifs dimères et motifs isocyanurates augmente et/ou la fonctionnalité moyenne en fonctions isocyanate de la composition polyisocyanate augmente, alors, la résistance chimique et la dureté du revêtement sont améliorées.

Les polyisocyanates présents dans la composition selon l'invention peuvent se présenter sous forme partiellement ou totalement masquée, c'est-à-dire que les fonctions isocyanate ne sont pas libres, mais masquées à l'aide d'un agent masquant ou d'un mélange d'agents masquants, tels qu'ils sont définis ci-après. On préfère notamment l'utilisation de compositions de polyisocyanates partiellement ou totalement masqués, de préférence encore totalement masqués notamment pour l'élaboration d'une formulation de revêtement de type mono-composant (formulation 1K).

Dans le présent exposé, on entend par polyisocyanate masqué un polyisocyanate pour lequel au moins 50 %, de préférence 80 %, avantageusement 90 % et plus préférentiellement encore toutes les fonctions isocyanate sont masquées.

L'agent masquant ou le mélange d'agents masquants qui protège temporairement, voire définitivement, les fonctions isocyanates sont des composés qui présentent au moins une fonction portant un hydrogène labile, généralement une fonction portant un hydrogène labile, de préférence une seule fonction portant un hydrogène labile et qui sont réactifs vis-à-vis de la fonction isocyanate. À cette fonction portant un hydrogène labile, peut être associée une valeur de pKa qui correspond soit à l'ionisation d'un acide [y compris l'hydrogène des fonctions -ols (dans la présente description

on entend par « -ol(s) » les phénols et les alcools)], soit à l'acide associé d'une base (en général azotée).

Plus précisément, pour optimiser les résultats de la présente invention, ledit pKa (ou l'un d'entre eux si l'on peut en définir plusieurs) de la fonction portant un ou des hydrogènes labiles est au moins égal à 4, avantageusement 5, de préférence 6 et est au plus égal à 14, avantageusement 13, de préférence 12, et de manière plus préférée 10. Une exception doit cependant être faite pour les lactames, dont le pKa est supérieur à ces valeurs et qui constituent des agents masquants possibles, bien que non préférés pour l'invention.

Un agent masquant est dit temporaire quand la fonction isocyanate est protégée temporairement par l'agent masquant et ne réagit pas dans les conditions de stockage du système formulé avec les fonctions hydroxyles du composé à hydrogène mobile notamment le polyol, mais est ensuite libéré au cours de la réaction de réticulation thermique.

La fonction isocyanate libérée réagit alors avec les fonctions à hydrogène mobile ou réactif du polyol pour donner une liaison uréthane et conduire au réseau polyuréthane qui constitue une partie du revêtement. L'agent masquant temporaire est soit éliminé comme composé organique volatil avec la plupart des solvants de formulation, soit reste dans le film, soit réagit avec la résine aminoplast, lorsque la formulation en contient.

À titre d'exemples non limitatifs d'agents masquants temporaires selon l'invention, on peut citer les dérivés de l'hydroxylamine tels que l'hydroxysuccinimide et les oximes telles tel que la méthyléthylcétoxime, les dérivés de l'hydrazine tels que les pyrazoles, les dérivés des triazoles, les dérivés des imidazoles, les dérivés des phénols ou assimilés, les dérivés des amides tels les imides et les lactames, tels que le caprolactame, les amines encombrées telles que la di-isopropylamine et la N-isopropyl-N-benzylamine, ainsi que les malonates ou cétoesters et les hydroxamates.

Ces composés peuvent éventuellement comporter des substituants notamment des chaînes alkyles ou alcoyles.

Pour la détermination des valeurs de pKa définies plus haut, on pourra se reporter à "The determination of ionization constants, a laboratory manual", A. Albert, E.P. Serjeant ; Chapman and Hall Ltd, London".

Pour la liste des agents masquants, on pourra se reporter à Z. Wicks (Prog. Org. Chem., (1975), 3, 73 et Prog. Org. Chem., 1989, 9,7) et Petersen (Justus Liebigs, Annalen der Chemie 562, 205, (1949).

Le(s) agent(s) masquant(s) utile(s) à la réaction de protection des fonctions isocyanate peuvent être hydrosolubles, partiellement hydrosolubles ou encore non solubles dans l'eau.

On préfère comme agents masquants temporaires la méthyléthylcétoxime encore appelée MEKO, le 3,5-dimétyhylpyrazole encore appelé DMP, les 2- ou 4-alkylimidazoles, les malonates de dialkyles, les $\beta$-céto-esters cycliques, les amines encombrées, le caprolactame et les triazoles, éventuellement substitués.

La présente invention ne se limite pas aux seuls agents masquants temporaires, mais peut aussi mettre en jeu des agents masquants dits définitifs. Ceux-ci se caractérisent par le fait que les fonctions isocyanate sont protégées par l'agent masquant et ne réagissent pas avec les fonctions hydroxyle du composé à hydrogène mobile, notamment le polyol, dans les conditions de stockage du système formulé, ni au cours de la réaction de réticulation thermique.

Les fonctions isocyanate ne sont donc pas restaurées au moment de la réaction de réticulation par cuisson au four et restent masquées, lesdites fonctions masquées pouvant alors réagir dans les conditions de réticulation avec les fonctions méthylole ($-N-CH_2-OH$) ou alkoxyalkyle ($-N-CH_2-O-$alkyle) des résines aminoplast, telles que celles définies précédemment, en présence d'un catalyseur acide, de préférence sulfonique, ou d'un précurseur latent de ce catalyseur qui peut être un sel d'amine tertiaire d'un acide sulfonique. Les composés ainsi obtenus font partie du revêtement.

Le ou les agent(s) masquant(s) utilisés pour protéger définitivement les fonctions isocyanate sont en général des composés à fonctions hydroxyle ou sulfhydryle, de préférence monofonctionnels, tels que les hydroxy(cyclo)alkanes, par exemple le méthanol, les butanols, le cyclohexanol, le 2-éthylhexanol ou des composés à fonctions acides carboxyliques, tels que l'acide propionique, l'acide pivalique, l'acide benzoïque, et autres. Ces composés peuvent éventuellement porter un ou plusieurs substituants.

Ces agents masquants dits « définitifs » peuvent également être des fonctions isocyanates masquées par des composés comportant au moins une fonction réticulable capable de polymériser par rayonnement UV. À titre d'exemple, on peut citer, comme agents masquants « définitifs », les hydroxy-alcoyl-acrylates ou -méthacrylates.

On peut aussi dans certains cas utiliser, en quantité généralement limitée, des agents masquants bi- ou polyfonctionnels, comportant des fonctions capables de donner des fonctions isocyanates masquées temporaires et/ou définitives. Toutefois, ceci n'est pas préféré car les composés polyisocyanates masqués présentent rapidement des viscosités élevées, et ce, d'autant plus que la fonctionnalité en fonctions isocyanate (NCO) est plus élevée.

Les composés à hydrogènes réactifs (ou mobiles) qui réagissent avec le(s) polyisocyanate(s) au cours du traitement thermique possèdent de préférence au moins deux atomes d'hydrogène mobiles, jusqu'à une vingtaine d'atomes d'hydrogène mobiles par molécule. Ces composés à hydrogène mobile sont généralement des polymères contenant deux ou plus fonctions hydroxyle (alcool ou phénol) et/ou fonctions thiol et/ou fonctions amines primaires ou secondaires et/ou contenant des fonctions précurseurs telles que par exemple des fonctions époxy ou carbonates qui, par réaction avec un nucléophile adéquat (une amine ou l'eau par exemple), libèrent les fonctions hydroxyles.

De préférence les composés sont choisis parmi les polyols qui peuvent être utilisés seuls ou en mélange.

Les polyols utilisés dans les formulations de l'invention sont avantageusement choisis parmi les polymères acryliques ou polyesters ou polyuréthanes ou polyéthers.

Pour des raisons d'élasticité des revêtements et particulièrement pour la couche dite « primaire », on préfère utiliser des polyols polyesters ou des polyesters uréthanes. En général, on utilise un mélange de deux résines polyesters ou polyesters uréthanes, l'une se caractérisant par un caractère « dur » et l'autre par un caractère « mou » ou « souple ». Le caractère dur ou souple des polyesters est conféré par la nature des monomères utilisés au cours de leur synthèse.
Ainsi un polyester « dur » sera obtenu en choisissant des monomères acides ou alcools aromatiques et/ou cyclo-aliphatiques et/ou fortement ramifiés. À titre d'exemples de ce type de monomères, on peut citer l'anhydride phtalique, ou le cyclohexane-diol ou le 2,2,4-triméthylpentanediol.
Un polyester « souple » est obtenu en choisissant des monomères aliphatiques linéaires peu ramifiés, tels que l'acide adipique ou le 1,4-butanediol ou le 1,6-hexanediol, ou bien comportant des hétéroatomes dans leur structure, tels que les di- ou poly-éthylène glycols. Ces derniers ne sont toutefois pas recherchés dans la mesure où ces composés présentent une faiblesse quand à leur stabilité aux rayonnements ultra violet.
Les polyols polyesters sont industriels et leur synthèse est largement décrite et connue de l'homme de l'art. Elle ne sera donc pas décrite dans ce document. Pour plus de détails, on pourra se reporter aux ouvrages suivants : « Matériaux polymères, structures, propriétés et applications » de Gottfried W. Ehrenstein et Fabienne Montagne édité en 2000 chez Hermès Science ; « Handbook of Polyurethanes » de Michael Szycher, édité en 1999 chez CRC Press ; « Resins for coatings, Chemistry, Properties and Applications » de D. Stoye and W. Freitag, édité chez Hanser en 1996, ainsi que le recueil de conférences de Eurocoat 1997 (pp 505 - 515) en page 507. On peut également consulter les catalogues commerciaux des sociétés distributrices de polyols notamment le livre intitulé « Specialty Resins, creating the solution together » de la société Akzo Nobel Resins édité en février 2001.
La fonctionnalité moyenne en fonctions hydroxyles des polymères polyols est au moins égale à 2, en général comprise entre 3 et 20. En général, pour l'application visée, une fonctionnalité trop élevée conduirait à des composés trop "durs" et on préfère utiliser des polyols polyesters de fonctionnalité relativement faible inférieure à 15, de préférence inférieure à 10, voire inférieure à 8.
La définition de la fonctionnalité moyenne en fonctions hydroxyles par chaîne polymère est par exemple donnée dans l'article de Ben Van Leeuwen « High solids hydroxy acrylics and tightly controled molecular weight » paru dans l'article d'Eurocoat 97 préalablement cité.
Cette fonctionnalité moyenne F(OH) se calcule à l'aide de l'équation suivante :

$$F(OH) = \frac{\text{Nombre OH} * Mn}{56100}$$

dans laquelle :

- F(OH) représente la fonctionnalité moyenne en fonctions hydroxyle ;
- Nombre OH représente le titre en fonctions hydroxyle exprimé en mg de KOH (hydroxyde de potassium) par gramme de polymère ;
- Mn représente la masse moléculaire moyenne en nombre du polymère, elle-même déterminée par chromatographie de perméation de gel (GPC), par comparaison avec des étalons de polystyrène calibrés.

La masse moléculaire moyenne en nombre des polyols polyesters utilisés dans la composition de l'invention est généralement comprise entre 500 et 10 000 de préférence entre 600 et 4 000.
Dans certains cas on peut aussi utiliser un polyol ou un mélange de polyols polyacryliques qui confèrent une dureté plus élevée au revêtement. Ces polyols peuvent être « durs » ou « souples » selon que l'on utilise des monomères présentant respectivement un caractère aromatique et/ou cycloaliphatique et/ou fortement ramifié pour cette propriété « dure » et des monomères présentant majoritairement un caractère aliphatique pour la propriété « souple ».
La synthèse des polyols acryliques est également connue de l'homme de l'art et on pourra consulter les livres préalablement cités pour avoir plus de détail sur leurs synthèses.
La masse moléculaire moyenne en nombre pour les polyols acryliques est généralement comprise entre 300 et 50 000, de préférence entre 500 et 25 000, avantageusement entre 1 000 et 15 000.
Le titre en fonctions hydroxyles est généralement compris entre 10 et 750 mg de KOH par gramme de polymère, de préférence compris entre 15 et 500 mg de KOH par gramme de polymère.
À titre d'exemple de polyols acryliques, on peut se reporter à l'article d'Eurocoat 97 préalablement cité, en page 515, où sont indiquées les caractéristiques de quelques polyols acryliques, ces exemples n'ayant aucun caractère limitatif.
On peut aussi utiliser des polyols hyperbranchés qui se caractérisent généralement par une fonctionnalité plus élevée que les polyols linéaires, mais ces produits ne sont pas préférés, compte tenu de la viscosité élevée de ces produits.
Des polyols structurés ou à blocs peuvent aussi être utilisés si l'on cherche un effet de compartimentation de

propriété. Toutefois ces produits, généralement plus coûteux, ne sont utilisés que pour apporter une propriété particulière. Ces composés sont par exemple un agent de rhéologie ou un agent d'aide à la dispersion de pigments.

En règle générale, pour les besoins de la présente invention, le ratio fonctions isocyanate / fonctions à hydrogène mobile est compris entre 1,5 et 0,5, de préférence entre 1,2 et 0,8. En particulier, lorsque le composé à hydrogène mobile est un polyol, le ratio fonctions isocyanate / fonctions hydroxyle est compris entre 1,5 et 0,5, de préférence entre 1,2 et 0,8.

La composition selon la présente invention comprend également une résine de type aminoplastique ou aminoplast de type mélamine formol et/ou urée formol et/ou benzoguanamine formol. Ces résines sont connues et des détails relatifs à leurs synthèses sont proposés dans les ouvrages cités précédemment, notamment dans le livre de Stoye et Freitag en page 102, chapitre 6.2.

Ces résines aminoplast réagissent notamment à une température comprise entre 100°C et 180°C avec les fonctions uréthanes du réseau polyuréthane préalablement créées ou formées au cours de la réaction de réticulation au four par la réaction des fonctions isocyanate, éventuellement libérées, avec les fonctions hydroxyles du polyol, ou avec les fonctions carbamate vraies ($R-O-C(=O)-NH_2$) portées éventuellement par les polyols et/ou les polyisocyanates.

La réaction de réticulation de ces résines aminoplast avec les fonctions uréthanes ou carbamate vraies ($R-O-C(=O)-NH_2$) est une réaction connue qui est généralement catalysée par un acide fort tel que l'acide para-toluènesulfonique ou l'acide naphtalène-sulfonique, ou encore une forme latente de ces catalyseurs acides à savoir les sels d'amine tertiaire de ces acides forts. On pourra se reporter aux livres cités précédemment pour avoir des informations plus complètes sur ces résines aminoplast et leurs synthèses.

La présence d'une ou plusieurs résines aminoplast dans la composition de revêtement selon la présente invention est particulièrement avantageuse pour la formation de la couche de base (ou "base coat"), et n'est en général pas nécessaire pour la formation de la couche de finition (ou "top coat"), bien que ceci ne soit pas exclut du champ de l'invention.

Les compositions selon la présente invention servent également de base aux formulations utilisées pour le Can et le Coil Coating.

Comme indiqué précédemment, les compositions selon l'invention confèrent aux substrats sur lesquels elles sont appliquées, des propriétés remarquables de dureté et de résistance au gravillonnage en particulier lorsqu'elles sont appliquées en tant que durcisseur d'une couche primaire, sur un substrat métallique par exemple l'aluminium et en particulier de l'acier inoxydable, ou sur un substrat en matière plastique.

Un autre avantage des compositions pour revêtement selon l'invention réside dans le fait que les substrats possèdent les propriétés remarquables exposées *supra,* sans pour autant observer une dégradation des autres propriétés.

Les revêtements ainsi obtenus conservent notamment une résistance aux attaques chimiques et/ou biologiques, et résistent notamment de manière tout à fait correcte aux déjections animales, en particulier aux fientes d'oiseaux.

Pour obtenir ces propriétés améliorées du revêtement, il est préférable de respecter les conditions suivantes :

- un ratio pondéral polyisocyanate(s) masqué(s) temporaire(s) et/ou définitif(s) par rapport à l'ensemble des résines (composé à hydrogène mobile, résine aminoplast et polyisocyanate(s) masqué(s)) compris entre 5 et 80% en poids, de préférence compris entre 10 et 60 % et avantageusement compris entre 15 % et 40 % ;
- une quantité pondérale en motifs dimère dans le(s) polyisocyanate(s) précurseur(s) (avant masquage de la fonction isocyanate) du(des) polyisocyanate(s) à fonctions isocyanate masquée(s) temporaire(s) et/ou définitive(s) comprise entre 0,25 et 25 % de préférence comprise entre 0,5 % et 20 % ;
- un ratio molaire [(fonctions isocyanates masquées et libres)/motifs iminotriazinedione) est inférieur à 100, de préférence inférieur à 90 ; et/ou un ratio molaire (motifs iminotriazinedione/motifs trimères) supérieur à 3 ; et
- une fonctionnalité moyenne en fonctions isocyanate du (ou des) polyisocyanate(s) précurseur(s) (avant masquage des fonctions isocyanate) en général au moins égale à 2 et au plus égale à 10, de préférence supérieure à 2,5 et au plus égale à 8, avantageusement comprise entre 2,8 et 6,5.

Une amélioration des propriétés recherchées peut encore être obtenue si l'on ajoute un additif tensio-actif à la formulation de polyisocyanate à fonction isocyanate masquée.

L'invention concerne en outre le procédé de préparation d'un revêtement multi-couches tel que défini précédemment comprenant au moins une composition de polyisocyanates exposée *supra,* ayant des propriétés de dureté et de résistance au gravillonnage améliorées.

Le procédé comprend les étapes de mélanges des divers composants du revêtement selon des techniques classiques connues dans ce domaine, et peuvent par exemple être effectués au moyen de mélangeurs traditionnels, tels que mélangeurs, malaxeurs broyeurs, selon la viscosité des divers composants et le type de revêtement souhaité. Il doit être cependant compris que les mélanges peuvent être effectués juste avant l'application du revêtement, ou bien encore sous forme d'une formulation prête à l'emploi (formulation mono-composant, ou encore formulation 1K), ou bien

encore sous formes de pré-mélanges qui seront mélangés entre eux juste avant emploi.

Il peut être par exemple avantageux de réaliser des pré-mélanges séparés de seulement deux ou trois des composants de la formulation de revêtement, puis de réaliser le mélange de deux ou trois pré-mélanges (formulations 2K ou 3K) juste avant emploi.

On préfère, dans le cas de la présente invention, les formulations de type 1K, c'est-à-dire les formulations prêtes à l'emploi et contenant l'ensemble des composants précités de la formulation de revêtement. Dans ce cas, les polyisocyanates sont avantageusement des polyisocyanates dont les fonctions isocyanates sont au moins partiellement, voire totalement masquées.

Il convient de noter toutefois que, lorsque un tensio-actif ou un mélange de tensio-actifs est présent dans la composition de polyisocyanates, ledit tensio-actif ou ledit mélange est introduit de préférence dans la composition polyisocyanate avant, pendant ou après la réaction de masquage de la fonction isocyanate par l'agent masquant.

Cependant, le tensio-actif ou le mélange de tensio-actifs peut aussi être incorporé directement à la composition de revêtement ou être apporté par un des autres composants de la composition de revêtement, à savoir avec le polyol, la résine aminoplast, avec le ou les pigments, s'il s'agit d'une peinture, ou avec les additifs ou avec tout autre composant de la composition polyuréthane finale.

La présente invention concerne également les substrats revêtus par la composition définie précédemment. Le substrat peut être de tout type, et est généralement un substrat métallique, par exemple aluminium ou acier, en particulier acier inoxydable. Le substrat peut également être un substrat en matériau plastique, c'est-à-dire un matériau polymère thermoplastique ou thermodurcissable, comprenant le cas échéant des charges, par exemple des charges de renfort, comme par exemple des fibres de verre, de carbone, et autres.

Grâce aux propriétés conférées par le revêtement précité, le substrat revêtu peut le cas échéant être plié, formé, embouti. Le substrat ainsi revêtu possède une excellente résistance au gravillonnage, ainsi qu'une excellente résistance aux lavages sous pression, voire haute-pression, notamment dans le cas des substrats en matière plastique.

Les exemples illustrant l'invention sont présentés dans la partie expérimentale ci-dessous et ne sont pas limitatifs de cette invention.

**Partie expérimentale**

Les matières premières principales sont des composés industriels commerciaux, à l'exception des compositions de polyisocyanates masqués additivées du tensio-actif qui sont préparées séparément.

Les matières de départ utiles à la synthèse des compositions de l'invention, dites formulations de durcisseurs polyisocyanates, sont :

- Méthyléthylcétoxime (MEKO) ;
- Tolonate® HDT HR 90 B, composé polyisocyanate à base HDI à 90% d'extrait sec (E.S.) dans l'acétate de n-butyle, commercialisé par la société Rhodia, de titre NCO : 0,413 moles de fonctions NCO pour 100 grammes, et de viscosité environ 2 000 mPa•s à 25°C et à 90% d'extrait sec (E.S.) ; dimère vrai : environ 2% en poids ;
- Tolonate® HPT LV2, composé polyisocyanate à base HDI à 100% E.S., commercialisé par la société Rhodia, de titre NCO : 0,547 moles de fonctions NCO pour 100 grammes, et de viscosité environ 600 mPa•s à 25°C ; dimère vrai : environ 15% en poids ;
- Tolonate® D2, produit commercial fourni par la société Rhodia qui est une formulation polyisocyanate à base HDI (Tolonate® HDT) masqué MEKO, à 75 % d'extrait sec dans le Solvesso® 100. Le titre NCO potentiel est de 11,2%. La viscosité est de l'ordre de 3 250 mPa•s à 25°C. La quantité pondérale en dimère vrai contenu dans le TOLONATE® D2 est de 0,7%.

*Analyse des motifs iminotrimères présents dans les durcisseurs polyisocyanates*

On utilise la spectrométrie de Résonance Magnétique Nucléaire du carbone 13 (RMN $^{13}C$, spectromètre AMX 300 équipé d'une sonde $^{13}C$ 10 mm qnp) en milieu chloroforme deutéré et en présence d'acétylacétonate de fer (FeAcAc) pour quantifier les motifs spécifiques des compositions polyisocyanates.

Les paramètres de mesure sont résumés dans le tableau suivant :

| Paramètres | Analyse quantitative |
|---|---|
| Programme | "CARQUANT.QNP" |
| Séquence | zgig30 |
| Découplage du proton | WALTZ 16 |

(suite)

| Paramètres | Analyse quantitative |
|---|---|
| Angle d'impulsion | 30° |
| Durée d'acquisition | 2 sec |
| Durée entre impulsions | 2 sec |
| Nombre d'accumulations | 8K |
| Largeur spectrale | 20000Hz |
| Fonction exponentielle avant la TF (LB) | 0.5 à 2 |
| Temps d'analyse | 9h |

L'attribution des signaux se fait principalement sur la base des fonctions carbonyles.

Le Tableau 1 suivant fournit la répartition des motifs dimères, trimères et iminotrimères contenus dans les polyisocyanates avant masquage, des exemples 1 et 2 (déterminés par RMN $^{13}C$), ainsi que le calcul des divers ratios des différents motifs.

**-- Tableau 1 : Répartition et ratios des motifs --**

| | ***Nombre de fonctions*** | | |
|---|---|---|---|
| ***Motifs caractéristiques (déterminés par RMN $^{13}C$)*** | ***Tolonate®HDT HR 90 B*** | ***Tolonate®HDT LV2*** | ***Tolonate®HDT*** |
| Cycle Trimère<br>Cycle Dimère<br>Iminotrimère | 100<br>4,6<br>3,5 | 100<br>24,7<br>4,0 | 100<br>8,7<br>2,8 |
| Fonction NCO | 224 | 351 | 287 |
| **Ratio des motifs** | | | |
| NCO / motifs dimères | 48 % | 14 % | 33 |
| NCO / motifs trimères | 2,24 % | 3,51 % | 2,87 |
| **NCO / motifs iminotrimère** | **64 %** | **88 %** | **102,5** |
| **Iminotrimère / trimère** | **3,5 %** | **4 %** | **2,8** |

Le masquage des fonctions isocyanates par les agents de masquage ne perturbe en rien le rapport motifs iminotrimères / motifs trimères. Après masquage, le rapport NCO libres + fonctions NCO masqués / motifs iminotrimère est identique au ratio NCO / motifs iminotrimères.

*Synthèse des durcisseurs polyisocyanates*

La synthèse des formulations de durcisseurs polyisocyanate masqué est décrite dans les exemples suivants.

**Exemple 1** : Synthèse de formulation de durcisseur polyisocyanate masqué (durcisseur 1 avec Tolonate® HDT HR 90 B)

Dans un réacteur tricol, à double enveloppe, équipé d'une agitation mécanique, d'un réfrigérant et d'ampoules d'addition, on charge successivement, sous agitation 3045 g de Tolonate® HDT HR 90 B, 974,2 g de Solvesso® 100 et 1095.6 g de MEKO. La réaction est exothermique et la température monte progressivement jusqu'à 95°C. Le milieu réactionnel est alors maintenu 2 heures à 80°C sous agitation.

La viscosité du produit ainsi masqué est de 6650 mPa•s à 25°C. Le titre potentiel en NCO est de 10,33% (le titre potentiel exprime le nombre de moles de fonctions NCO qui peuvent être restaurées par chauffage à 150°C environ). La fonctionnalité moyenne en fonctions isocyanates du polyisocyanate précurseur Tolonate® HDT HR 90 B est de l'ordre de 4,5, ce qui donne une fonctionnalité moyenne en fonctions isocyanate masquée de l'ordre de 4,5, l'opération de masquage n'entraînant pas de modifications quant à la fonctionnalité moyenne.

Le taux de liaisons entre motifs dimères (urétidine-diones) et isocyanurates est élevé et se caractérise par un

ratio élevé « bandes carbonyles à motifs dimère » / « bandes carbonyles à motifs trimères » dans les polyisocyanates lourds (supérieur au trimère), mesuré par la technologie Infra-Rouge couplée à une chromatographie par perméation sur gel de polymère (cf. demandes de brevets FR 2 822 828 et FR 2 837 820). Ce ratio est de l'ordre de 3,5. La quantité de motifs dimère contenus dans les lourds représente environ 40 % des motifs dimères totaux du polyisocyanate de départ avant masquage.

**Exemple 2** : Synthèse de formulation de durcisseur polyisocyanate masqué (durcisseur 2 avec Tolonate® HDT LV2)

On procède comme pour l'exemple 1 sauf que l'on utilise comme polyisocyanate de départ le produit commercial Tolonate® HDT LV2.

Dans un réacteur tricol, à double enveloppe, équipé d'une agitation mécanique, d'un réfrigérant et d'ampoules d'addition on charge successivement, sous agitation, 2616 g de Tolonate® HDT LV2, 1289,2 g de Solvesso® 100 et 1251,8 g de MEKO. La réaction est exothermique et la température monte progressivement jusqu'à 90°C. Le milieu réactionnel est alors maintenu 2 heures à 80°C sous agitation. La viscosité du produit ainsi masqué est de 1970 mPa·s à 25°C. Le titre potentiel en NCO est de 11,72 % (le titre potentiel exprime le nombre de moles de fonctions NCO qui peuvent être restaurées par chauffage à 150°C environ).

**Exemples 3 et 4** : Essais en application OEM

Description des formulations

*Polyol :*

- Vialkyd® 927/70X, fourni par la société UCB Surface Specialties ; et
- Vialkyd® VAN 6138/80X fourni par la société UCB Surface Specialties.

*Résine aminoplastique :*

- Maprenal® MF980/62B, fournie par la société UCB Surface Specialties.

Les formulations sont préparées comme indiqué dans le Tableau 2 ci-dessous. Les caractéristiques des formulations sont présentées dans le Tableau 3 suivant.

-- **Tableau 2** : **Formulations d'apprêt OEM anti-gravillonnage** --

| ***Composants de la formulation base*** | ***Quantité (g)*** | ***Fonction*** | ***Fournisseur*** |
|---|---|---|---|
| **Partie 1** | | | |
| Vialkyd® AN 927/7 0X | 22.45 | Résine polyester dure | UCB Surface Specialties |
| Kronos® 2310 | 13.55 | Pigment (TiO2) | Kronos |
| Blanc Fixe micro | 18.50 | Charge | Sachtleben Chemie |
| Special Black SP 4 | 0.05 | Pigment Noir | Degussa |
| Aerosil® R 972 | 0.30 | Additif de rhéologie (silice calcinée) | Degussa |
| Ircogel® 905 | 0.20 | Additif de rhéologie (sur base calcium) | The Lubrizol Corp. |
| Butyldiglycol | 2.10 | Solvant | |
| BYK-358 N® | 0.60 | Agent d'étalement | BYK Chemie |
| Additol VXL 6212® | 0.20 | Agent de mouillage et de dispersion | UCB Surface Specialties |
| Acétate de méthoxy-propyle | 0.20 | Solvant | |

(suite)

| *Composants de la formulation base* | *Quantité (g)* | *Fonction* | *Fournisseur* |
|---|---|---|---|
| ***Broyer au broyeur à billes jusqu'à finesse 9 à la jauge de NORTH puis ajouter partie 2 :*** | | | |
| **Partie 2** | | | |
| Solvesso® 100 | 10.50 g | Solvant (coupe alkyle benzène) | ExxonMobil Chemical |
| Exxal® 13 | 2.50 g | Agent anti pin hole (isotridécanol) | ExxonMobil Chemical |
| Vialkyd® AN 903/7 0 EPAC | 9.60 g | Résine polyester flexible | UCB Surface Specialties |
| Maprenal® MF 980/ 62 B | 5.55 g | Benzoguanamine | UCB Surface Specialties |
| **Formulation de durcisseur polyisocyanate masqué de l'invention à tester** | **13.50 g** | **Polyisocyanate bloqué** | **Rhodia PPMC** |
| Additol® XL 480 | 0.20 g | Agent d'étalement | UCB Surface Specialties |
| | 100.00 g | | |

-- **Tableau 3** : **Caractéristiques des formulations du Tableau 2** --

| | |
|---|---|
| Extrait sec | Environ 68 % |
| Ratio pondéral des résines utilisées | Polyesters/Benzoguanamine/Polyisocyanate bloqué = 62,3 / 9,6 / 28,1 |
| Ratio pigment sur liant | 90 / 100 = 0,90 |
| Viscosité d'application | 28 secondes CAF 4* 23°C |
| Dilution | 70 secondes CAF 4* avec Solvesso® 100 |
| | 28 secondes CAF 4* avec xylène/acétate de butyle (40/60) |
| * CAF 4 : Coupe Ford n° 4 | |

Fabrication du primaire (apprêt) OEM anti-gravillonnage à tester

On ajoute dans un réacteur l'ensemble des composants de la partie 1 qui sont broyés au broyeur à billes jusqu'à obtenir la finesse 9 à la jauge de North. On complète alors par ajout des composants de la partie 2 et on mélange l'ensemble des composants. La formulation est ensuite appliquée sur le support retenu.

Fabrication du revêtement

La fabrication du revêtement se fait dans des conditions standard de la préparation d'un revêtement première monte automobile (OEM) et l'application des formulations est faite au pistolet pneumatique. Les conditions d'applications sont décrites ci après.

On utilise comme support des revêtements des plaques standard prétraitées de type « Offredy » recouvert d'un traitement cataphorèse PP1 de référence de plaque EC 090190 DB 1 PP1.

Sur cette plaque, on applique au pistolet pneumatique la formulation de primaire à tester. Après application, on procède à une évaporation rapide (Flash) de 10 minutes à température ambiante puis on procède à la cuisson au four à une température de 150°C pendant 30 minutes. L'épaisseur du primaire est de 30 à 35 microns.

Après cuisson et refroidissement, on applique au pistolet pneumatique une base commerciale Gris aluminium PSA solvant (PE/MEL/CAB), référence PPG. L'épaisseur d'application est d'environ 15 $\mu$m. On procède alors à une évaporation flash à température ambiante pendant 10 minutes puis on applique « wet on wet » (mouillé sur mouillé) un vernis standard automobile référencé Vernis (ACRY/MEL/Crosslinker) HTR 3000 PPG pour PSA. L'épaisseur d'application est d'environ 40 $\mu$m.

Après une évaporation flash de 10 minutes à température ambiante, on procède à une cuisson au four à 140°C

durant 30 minutes.

Le revêtement est alors laissé à température ambiante une journée puis les propriétés du revêtement sont mesurées.

Caractérisations physico-chimiques

Les mesures physicochimiques qui caractérisent les propriétés des revêtements obtenus avec les différents systèmes sont les suivantes :

- Dureté Persoz : les mesures de dureté pendulaire sont réalisées sur le feuil polymérisé à tester.
- Détrempe au xylène : les mesures sont réalisées sur le feuil polymérisé à tester.
- Résistance au gravillonnage : selon la méthode PSA n° D24 1312.
- Mesures de résistance aux chocs : selon la méthode de l'Embouti Erichsen, et selon la norme ASTM ISO 6212.

Les épaisseurs de films sur substrat sont systématiquement contrôlées. L'exemple 3 correspond à la formulation utilisant le durcisseur polyisocyanate de l'exemple 1, l'exemple 4 correspond à la formulation utilisant le durcisseur polyisocyanate de l'exemple 2.

**Résultats :**

Les résultats des différents tests sont récapitulés dans le tableau 4 ci-après.

-- **Tableau 4** : **Résultats des tests des formulations** --

| *Formulation* | *Épaisseur du primaire en $\mu m$* | *Dureté Persoz (s)* | *Détrempe Xylène ** | *Embouti Erichsen (mm)* | *Gra villonage 1ère Monte D24 1312 Cotation cible : ≤ 2* | *Gra villonage Retouche D24 1312 Cotation cible : ≤ 3* |
|---|---|---|---|---|---|---|
| Exemple 3 | 35 | 279 | 0 | 6.9 | 2 | 1 |
| Exemple 4 | 35 | 226 | 0 | 6,5 | 1-2 | 2 |
| * 0 : pas de ramollissement, 1 : ramollissement, 2 : destruction du film | | | | | | |

Conclusions sur les résultats obtenus en OEM :

**1**/ On constate que la dureté Persoz des revêtements est élevée et augmente avec la fonctionnalité moyenne en fonctions isocyanate du mélange polyisocyanate précurseur de la formulation polyisocyanate masqué et avec l'augmentation des enchaînements « isocyanurate - dimère - isocyanurate ». On note ainsi un gain de 53 secondes pour la formulation utilisant le Tolonate® HDT HR 90B comparativement à celle utilisant le Tolonate® HDT LV2.

**2**/ Les revêtements de l'invention (formulations des exemples 3 et 4) présentent tous deux une résistance au gravillonnage élevée égale voire inférieure à la cotation cible, une valeur inférieure à la valeur cible étant le gage d'une résistance plus élevée, donc une meilleure performance.

**3**/ Le revêtement obtenu à partir d'un polyisocyanate de plus haute fonctionnalité contenant des enchaînements « isocyanurate - dimère - isocyanurate » présente une meilleure dureté Persoz et une meilleure résistance au gravillonnage notamment lors des opérations de retouche.

**Exemple 5 et Exemple comparatif** : Application de revêtements pour Can Coating

Description des formulations

| Composants de la formulation | Quantité (g) | Fonction | Fournisseur |
|---|---|---|---|
| Polymac® 320-1308 | 103,5 | Polyol | Eastman Chemical |
| Aerosil® 200 | 0,5 | Agent de rhéologie | Degussa |
| Modaflow® 2100 | 0,9 | Agent d'étalement | DOW |
| Oxyde de titane | 78,8 | Pigment | Kronos |
| Durcisseur Polyisocyanate à tester | 10,8 | Polyisocyanate masqué | RHODIA |
| Rhodiasolv® RPDE | 11,3 | Solvant | RHODIA |
| Solvesso® 150 | 40,3 | Solvant | ExxonMobil Chemical |

Le ratio NCO/OH est de 0,8 et a été gardé constant lors des essais avec le Tolonate® HDT HR 90B bloqué MEKO (Exemple 1). Les résultats portant sur le Can Coating obtenus sont regroupés dans les tableaux 5 et 6 suivants.

L'exemple 5 correspond à la formulation visée par l'invention utilisant le durcisseur polyisocyanate de l'exemple 1. L'exemple comparatif correspond à la formulation mettant en oeuvre une composition qui utilise comme durcisseur polyisocyanate le Tolonate® D2 issu du masquage du Tolonate® HDT par la MEKO (cf. Tableau 1, colonne de droite).

**-- Tableau 5 : Mesures effectuées 3 heures après la cuisson --**

| *Durcisseur polyisocyanate masqué* | | *Comparatif* | *Exemple 5* | *Comparatif* | *Exemple 5* |
|---|---|---|---|---|---|
| *Conditions de cuisson* | *Épaisseur de la peinture (µm)* | *Dureté Persoz (sec.)** | | *Double rub à la méthyléthylcétone*** | |
| 12 min à 150°C | 25 | 70 | 80 | 4 | 13 |
| 12 min à 170°C | 25 | 80 | 90 | 22 | 75 |
| 12 min à 180°C | 24 | 85 | 95 | 45 | 77 |
| 12 min à 190°C | 24 | 90 | 90 | 55 | 84 |
| * Plus la valeur est élevée et plus la dureté est élevée.<br>** le double rub à la méthyléthylcétone caractérise la résistance chimique du revêtement : plus la valeur est élevée meilleure est la résistance. | | | | | |

**-- Tableau 6 : Mesures effectuées 1 jour après la cuisson --**

| *Durcisseur polyisocyanate masqué* | | *Comparatif* | *Exemple 5* | *Comparatif* | *Exemple 5* |
|---|---|---|---|---|---|
| *Conditions de cuisson* | *Epaisseur de la peinture (µm)* | *Dureté Persoz (sec.)** | | *Double rub à la méthyléthylcétone *** | |
| 12 min à 150°C | 25 | 80 | 80 | 5 | 14 |
| 12 min à 170°C | 25 | 90 | 90 | 47 | 75 |
| 12 min à 180°C | 24 | 100 | 100 | 57 | 97 |
| 12 min à 190°C | 24 | 120 | 125 | 72 | 125 |
| * Plus la valeur est élevée et plus la dureté est élevée.<br>** le double rub à la méthyléthylcétone caractérise la résistance chimique du revêtement : plus la valeur est élevée meilleure est la résistance. | | | | | |

Conclusions sur exemple 5 :

On constate que le revêtement obtenu à partir de la formulation utilisant le polyisocyanate masqué issu du Tolonate® HDT HR 90 B, de fonctionnalité moyenne en fonctions isocyanate masquée de l'ordre de 4,5 présente une dureté Persoz et une résistance chimique beaucoup plus élevées que le revêtement obtenu à partir du durcisseur Tolonate® D2, de fonctionnalité moyenne en fonctions isocyanate masqué de l'ordre de 3,6, ce pour des conditions de cuisson au four identiques.

Les formulations de l'invention permettent donc un gain de productivité ou un gain en température.

## Revendications

1. Utilisation d'une composition comprenant :

   a) au moins un polyisocyanate comportant au moins un motif dimère et au moins un polyisocyanate, identique ou différent du précédent, comportant au moins un motif iminotriazinedione, le(s)dit(s) polyisocyanates présentant l'une et/ou l'autre, de préférence les deux caractéristiques suivantes :- le ratio molaire (fonctions isocyanates/motifs iminotriazinedione) avant masquage est inférieur à 100, de préférence inférieur à 90 ; et/ou le ratio molaire (motifs iminotriazinedione /motifs trimères) est supérieur à 3 ;
   b) au moins un composé porteur d'au moins une fonction à hydrogène mobile choisie parmi les fonctions hydroxyles primaires ou secondaires, phénols, amines primaires et/ou secondaires, carboxyliques et fonction SH, et
   c) au moins une résine aminoplastique (résine « aminoplast ») de type mélamine-aldéhyde, en particulier mélamine-formaldéhyde et/ou urée-aldéhyde, en particulier urée-formaldéhyde, ou benzoguanamine et/ou leurs dérivés alkoxyalkyles,

   pour l'élaboration d'un revêtement par réticulation par traitement thermique.

2. Utilisation selon la revendication 1, dans laquelle la composition comprend en outre :

   d) au moins un catalyseur de la réaction du composé a) avec le composé c), et/ou au moins un composé de type acide fort, ou une forme latente dudit acide fort, en tant que catalyseur de la réaction des composés mélamines et/ou urées ou de leurs dérivés avec les fonctions uréthanes ou carbamates vraies.

3. Utilisation d'une composition selon l'une quelconque des revendications précédentes, dans laquelle ladite composition agit comme durcisseur de la couche primaire d'un revêtement.

4. Utilisation d'une composition selon l'une quelconque des revendications précédentes, pour l'élaboration d'un revêtement pour première monte.

5. Utilisation selon l'une quelconque des revendications 1 à 3, pour des opérations de retouches.

6. Utilisation selon l'une quelconque des revendications précédentes, dans laquelle la composition polyisocyanate permet la préparation d'un revêtement sous l'aspect d'une formulation monocomposant (1K), ou bien d'une formulation bi-composant (2K) ou encore multi-composants.

7. Composition comprenant :

   a) au moins un polyisocyanate comportant au moins un motif dimère et au moins un polyisocyanate, identique ou différent du précédent, comportant au moins un motif iminotriazinedione, le(s)dit(s) polyisocyanates présentant l'une et/ou l'autre, de préférence les deux caractéristiques suivantes :

      - le ratio molaire (fonctions isocyanates/motifs iminotriazinedione) avant masquage est inférieur à 100, de préférence inférieur à 90 ; et/ou
      - le ratio molaire (motifs iminotriazinedione /motifs trimères) est supérieur à 3 ;

   b) au moins un composé porteur d'au moins une fonction à hydrogène mobile choisie parmi les fonctions hydroxyles primaires ou secondaires, phénols, amines primaires et/ou secondaires, carboxyliques et fonction SH ; et
   c) au moins une résine aminoplastique (résine « aminoplast ») de type mélamine-aldéhyde, en particulier mélamine-formaldéhyde et/ou urée-aldéhyde, en particulier urée-formaldéhyde, ou benzoguanamine et/ou leurs dérivés alkoxyalkyles.

8. Composition selon la revendication 7, comprenant en outre :

d) au moins un catalyseur de la réaction du composé a) avec le composé c), et/ou au moins un composé de type acide fort, ou une forme latente dudit acide fort, en tant que catalyseur de la réaction des composés mélamines et/ou urées ou de leurs dérivés avec les fonctions uréthanes ou carbamates vraies.

**9.** Composition selon l'une quelconque des revendications 7 ou 8 comprenant :

- au moins un polyisocyanate contenant une quantité pondérale en motifs dimères comprise entre 0,25% et 25%, de préférence entre 0,5% et 20% par rapport à la masse totale du (des) polyisocyanate(s), lesdits motifs dimères étant reliés à un ou plusieurs motifs isocyanurates par des chaînes hydrocarbonées, de préférence des chaînes alkyle,
- au moins un polyisocyanate identique ou différent du précédent contenant au moins un motif iminotriazinedione,
- éventuellement au moins un polyisocyanate, identique ou différent des précédents, contenant un dimère vrai ;
- au moins un composé porteur de fonction à hydrogène mobile, telles que des fonctions hydroxyles, et/ou des fonctions amines primaires et/ou secondaires, et/ou des fonctions SH ;
- au moins un solvant organique ;
- au moins une résine aminoplast de type mélamine/formaldéhyde et/ou urée/formaldéhyde ou benzoguanamine et/ou leurs dérivés alkoxyalkyle ; et
- éventuellement au moins un catalyseur de réaction de polyuréthannes et/ou au moins un catalyseur acide fort de la réaction des composés mélamines et/ou urées ou de leurs dérivés avec les fonctions uréthannes ou carbamates vraies.

**10.** Composition selon l'une quelconque des revendications 7 à 9, dans laquelle les motifs dimères sont reliés à un ou plusieurs motifs isocyanurates sous la forme d'enchaînements représentés par les formules (I) à (V) suivantes et leurs mélanges :

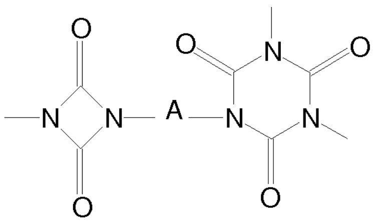

(I)

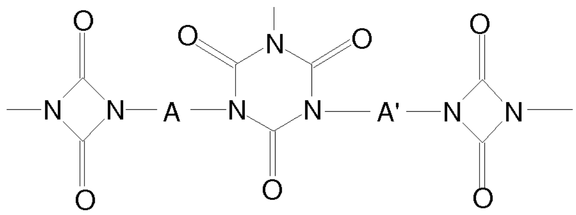

(II) ;

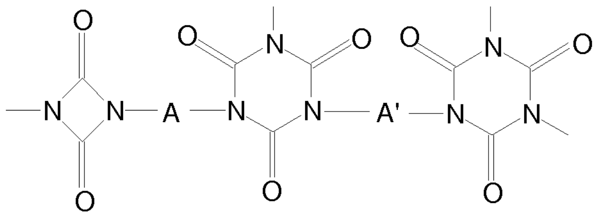

(III) ;

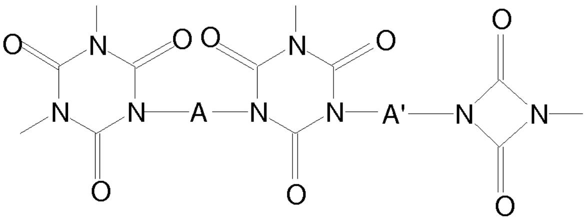

(IV) ;

et

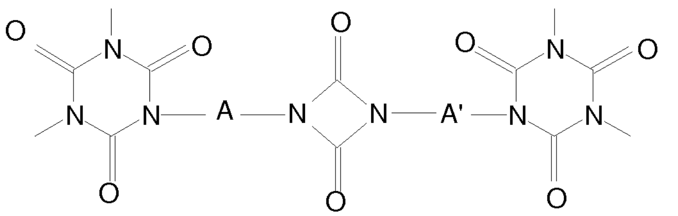

(V),

dans lesquels A et A' identiques ou différents représentent les restes d'un composé isocyanate monomère après enlèvement de deux fonctions isocyanates, et de préférence, A et A' représentent chacun un radical bivalent linéaire, ramifié ou cyclique contenant de 1 à 20 atomes de carbone, de préférence, de 2 à 12 atomes de carbone, avantageusement de 2 à 8 atomes de carbone, par exemple 6 atomes de carbone, et comportant en outre éventuellement 1, 2 ou 3 fonctions isocyanate.

**11.** Composition selon l'une quelconque des revendications 7 à 10 comprenant :

- de 5% à 20% en poids d'au moins un polyisocyanate, par rapport au poids total de la composition sans solvant (% sur sec) ;
- de 15% à 25% en poids d'au moins une résine aminoplast, par rapport au poids total de la composition sans solvant (% sur sec) ;
- de 55% à 80% en poids d'au moins un composé porteur d'au moins une fonction à hydrogène mobile choisie parmi les fonctions hydroxyles primaires ou secondaires, phénols, amines primaires, et/ou secondaires, carboxyliques et fonction SH, par rapport au poids total de la composition sans solvant (% sur sec) ; et
- de 35% à 55%, avantageusement environ 45% en poids, d'au moins un solvant organique, par rapport au poids total de la composition.

**12.** Composition selon l'une des revendications 7 à 11, dans laquelle le(s) polyisocyanate(s) est(sont) choisi(s) parmi les produits d'homo- ou d'hétéro-condensation d'alcoylènedi-isocyanate, comprenant notamment des produits du type "biuret" et du type "trimères", voire "prépolymères" à fonction isocyanate, comportant notamment des fonctions urée, uréthane, allophanate, ester, amide, acylurée, isocyanurate, oxadiazinetrione, immino-dimère, immino-trimère (imminotriazadione), immino-oxadiazinedione (encore appelé trimère asymétrique), diazétidinedione (encore appelé dimère), et parmi les mélanges en contenant.

**13.** Composition selon l'une quelconque des revendications 7 à 12, dans laquelle le(s) polyisocyanate(s) est(sont) masqué(s) de manière temporaire et/ou définitive, de préférence par un agent de masquage ou un mélange d'agents de masquage présentant au moins une fonction portant un hydrogène labile.

**14.** Composition selon la revendication 13, dans laquelle l'agent de masquage ou le mélange d'agents de masquage est choisi parmi les dérivés de l'hydroxylamine, les oximes, les dérivés de l'hydrazine, les dérivés des triazoles, les dérivés des imidazoles, les dérivés des phénols ou assimilés, les dérivés des amides, imides et lactames, les amines encombrées, ainsi que les malonates ou cétoesters et les hydroxamates et leurs mélanges, pour les agents de masquage temporaires et parmi les composés à fonctions hydroxyle ou sulfhydryle, de préférence monofonctionnels, le cyclohexanol et les composés à fonctions acides carboxyliques, et leurs mélanges, pour les agents de masquage dits définitifs.

**15.** Composition selon l'une des revendications 7 à 14, dans laquelle le composé à hydrogène réactif (ou mobile) qui réagit avec le(s) polyisocyanate(s) au cours traitement thermique est un polymère contenant deux ou plus fonctions hydroxyle (alcool ou phénol) et/ou fonctions thiol et/ou des fonctions amines primaires ou secondaires et/ou contenant des fonctions précurseurs, de type époxy ou carbonates qui, par réaction avec un nucléophile adéquat, libèrent les fonctions hydroxyles.

**16.** Composition selon la revendication 15, dans laquelle le composé à hydrogène réactif (ou mobile) est un polyol choisi parmi les polymères acryliques ou polyesters ou polyuréthanes.

**17.** Composition selon l'une quelconque des revendications 7 à 16, dans laquelle la résine de type aminoplastique ou aminoplast est une résine de type mélamine formol et/ou urée formol et/ou benzoguanamine formol.

**18.** Composition selon l'une des revendications 7 à 17, respectant l'une des conditions suivantes :

• un ratio pondéral polyisocyanate(s) masqué(s) temporaire(s) et/ou définitif(s) par rapport à l'ensemble des résines [composé(s) à hydrogène(s) mobile(s), résine(s) aminoplast et polyisocyanate(s) masqué(s)] compris entre 5 et 80% en poids, de préférence compris entre 10 et 60 % et avantageusement compris entre 15 % et 40 % ;
• une quantité pondérale en motifs dimère dans le(s) polyisocyanate(s) précurseur(s) comprise entre 0,25 et 25 % de préférence compris entre 0,5 % et 20 % ; et
• un ratio molaire [(fonctions isocyanates masquées et libres)/motifs iminotriazinedione) est inférieur à 100, de préférence inférieur à 90 ; et/ou

- un ratio molaire (motifs iminotriazinedione /motifs trimères) supérieur à 3 ; et

• une fonctionnalité moyenne en fonctions isocyanate du (ou des) polyisocyanate(s) précurseur(s) (avant masquage des fonctions isocyanate) en général au moins égale à 2 et au plus égale à 10, de préférence supérieure à 2,5 et au plus égale à 8 avantageusement comprise entre 2,8 et 6,5.

**19.** Procédé de préparation d'une composition selon l'une quelconque des revendications 7 à 18 comprenant les étapes de mélanges des divers composants de ladite composition, lesdits mélanges étant effectués juste avant l'application du revêtement, ou bien encore sous forme d'une formulation prête à l'emploi (formulation mono-composant, ou encore formulation 1K), ou bien encore sous formes de pré-mélanges qui seront mélangés entre eux juste avant emploi.

**20.** Revêtement comprenant une, deux, trois, ou plus, couches, dont au moins une couche, de préférence la couche primaire, est une composition selon l'une des revendications 7 à 18.

**21.** Substrat revêtu d'au moins une composition polyisocyanate selon l'une quelconque des revendications 7 à 18.

## Patentansprüche

**1.** Verwendung einer Zusammensetzung, umfassend:

a) mindestens ein Polyisocyanat, aufweisend mindestens ein Dimermotiv und mindestens ein Polyisocyanat, identisch oder unterschiedlich vom vorangehenden, aufweisend mindestens ein Imintriazindionmotiv, wobei das/die Polyisocyanat/e, das eine und/oder das andere, vorzugsweise die zwei folgenden Merkmale aufweisen:
- das molare Verhältnis (Isocyanatfunktionen/Imintriazindionmotive) vor der Maskierung ist kleiner als 100, vorzugsweise kleiner als 90, und/oder das molare Verhältnis (Imintriazindionmotive/Trimermotive) ist größer als 3,
b) mindestens eine Verbindung, die mindestens eine Funktion mit mobilem Wasserstoff trägt, ausgewählt aus den primären oder sekundären Hydroxyl-, Phenol-, primären und/oder sekundären Amin-, Carboxylfunktionen und SH-Funktion, und
c) mindestens ein aminoplastisches Harz (Harz "Aminoplast") vom Typ Melaminaldehyd, insbesondere Melaminformaldehyd und/oder Harnstoffaldehyd, insbesondere Harnstoffformaldehyd, oder Benzoguanamin und/oder deren Alkoxyalkylederivate,

für die Ausbildung einer Beschichtung durch Vernetzung durch thermische Bearbeitung.

**2.** Verwendung nach Anspruch 1, wobei die Zusammensetzung ferner umfasst:

d) mindestens einen Katalysator der Reaktion der Verbindung a) mit der Verbindung c) und/oder mindestens eine Verbindung vom Typ starke Säure oder eine latente Form der starken Säure als Katalysator der Reaktion der Melamin- und/oder Harnstoffverbindungen oder ihrer Derivate mit den echten Urethan- oder Carbamatfunktionen.

**3.** Verwendung einer Zusammensetzung nach einem der vorangehenden Ansprüche, wobei die Zusammensetzung als Härter der Primärschicht einer Beschichtung wirkt.

**4.** Verwendung einer Zusammensetzung nach einem der vorangehenden Ansprüche für die Ausbildung einer Beschichtung für Erstausrüstung.

**5.** Verwendung nach einem der Ansprüche 1 bis 3 für Retouchemaßnahmen.

**6.** Verwendung nach einem der vorangehenden Ansprüche, wobei die Polyisocyanatzusammensetzung die Herstellung einer Beschichtung unter dem Aspekt einer Monokomponentenformulierung (1K) oder auch einer Bikomponentenformulierung (2K) oder auch Multikomponentenformulierung erlaubt.

**7.** Zusammensetzung, umfassend:

a) mindestens ein Polyisocyanat, aufweisend mindestens ein Dimermotiv und mindestens ein Polyisocyanat, identisch oder unterschiedlich vom vorangehenden, aufweisend mindestens ein Imintriazindionmotiv, wobei das/die Polyisocyanat/e, das eine und/oder das andere, vorzugsweise die zwei folgenden Merkmale aufweisen:

- das molare Verhältnis (Isocyanatfunktionen/Imintriazindionmotive) vor der Maskierung ist kleiner als 100, vorzugsweise kleiner als 90, und/oder
- das molare Verhältnis (Imintriazindionmotive/Trimermotive) ist größer als 3,

b) mindestens eine Verbindung, die mindestens eine Funktion mit mobilem Wasserstoff trägt, ausgewählt aus den primären oder sekundären Hydroxyl-, Phenol-, primären und/oder sekundären Amin-, Carboxylfunktionen und SH-Funktion, und
c) mindestens ein aminoplastisches Harz (Harz "Aminoplast") vom Typ Melaminaldehyd, insbesondere Melaminformaldehyd und/oder Harnstoffaldehyd, insbesondere Harnstoffformaldehyd, oder Benzoguanamin und/oder deren Alkoxyalkylederivate.

**8.** Zusammensetzung nach Anspruch 7, umfassend ferner:

d) mindestens einen Katalysator der Reaktion der Verbindung a) mit der Verbindung c) und/oder mindestens eine Verbindung vom Typ starke Säure oder eine latente Form der starken Säure als Katalysator der Reaktion der Melamin- und/oder Harnstoffverbindungen oder ihrer Derivate mit den echten Urethan- oder Carbamatfunktionen.

**9.** Zusammensetzung nach einem der Ansprüche 7 oder 8, umfassend:

- mindestens ein Polyisocyanat, enthaltend eine gewichtsmäßige Menge an Dimermotiven zwischen 0,25 % und 25 %, vorzugsweise zwischen 0,5 % und 20 %, inklusive in Bezug zur Gesamtmasse des/der Polyisocyanats/e, wobei die Dimermotive mit einem oder mehreren Isocyanuratmotiven durch Kohlenwasserstoffketten, vorzugsweise Alkylketten, verbunden sind,
- mindestens ein Polyisocyanat, identisch oder unterschiedlich vom vorangehenden, aufweisend mindestens ein Imintriazindionmotiv,
- eventuell mindestens ein Polyisocyanat, identisch oder unterschiedlich von den vorangehenden, enthaltend ein echtes Dimer,
- mindestens eine Verbindung, die mindestens eine Funktion mit mobilem Wasserstoff trägt, wie Hydroxylfunktionen und/oder primäre und/oder sekundäre Aminfunktionen und/oder SH-Funktionen,
- mindestens ein organisches Lösungsmittel,
- mindestens ein Aminoplastharz vom Typ Melamin/Formaldehyd und/oder Harnstoff/Formaldehyd oder Benzoguanamin und/oder deren Alkoxyalkylderivate und
- eventuell mindestens einen Katalysator der Polyurethanreaktion und/oder mindestens einen Katalysator starke Säure der Reaktion der Melamin- und/oder Harnstoffverbindungen oder ihrer Derivate mit den echten Urethan- oder Carbamatfunktionen.

**10.** Zusammensetzung nach einem der Ansprüche 7 bis 9, wobei die Dimermotive mit einem oder mehreren Isocyanuratmotiven in Form von Verkettungen verbunden sind, die von den folgenden Formeln (I) bis (V) und deren Gemischen dargestellt sind:

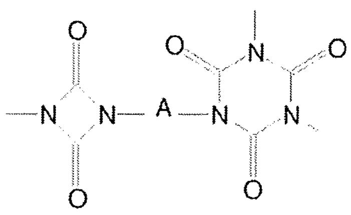

(I)

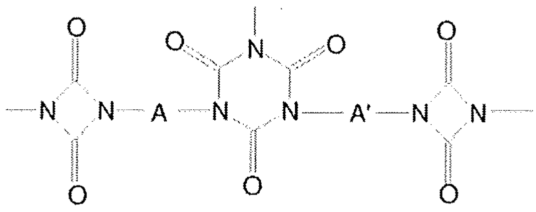

(II) ;

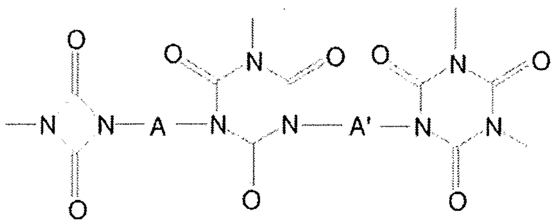

(III)

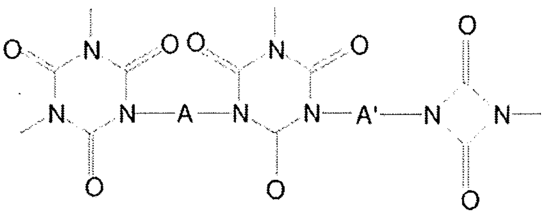

(IV) ;

und

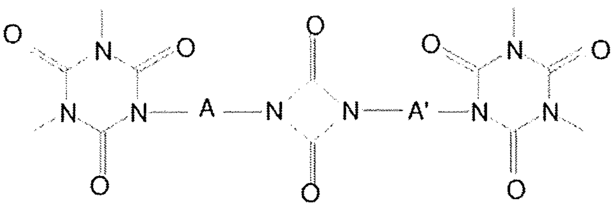

(V),

wobei A und A' identisch oder unterschiedlich die Reste einer Isocyanatmonomerverbindung nach Entfernen von zwei Isocyanatfunktionen darstellen und vorzugsweise A und A' jeweils ein lineares, verzweigtes oder cyclisches zweiwertiges Radikal darstellen, enthaltend 1 bis 20 Kohlenstoffatome, vorzugsweise 2 bis 12 Kohlenstoffatome, in vorteilhafter Weise 2 bis 8 Kohlenstoffatome, beispielsweise 6 Kohlenstoffatome, und aufweisend ferner eventuell 1, 2 oder 3 Isocyanatfunktionen.

**11.** Zusammensetzung nach einem der Ansprüche 7 bis 10, umfassend:

- 5 bis 20 Gew.-% mindestens eines Polyisocyanats im Verhältnis zum Gesamtgewicht der Zusammensetzung ohne Lösungsmittel (% zu trocken),
- 15 bis 25 Gew.-% mindestens eines Aminoplastharzes im Verhältnis zum Gesamtgewicht der Zusammensetzung ohne Lösungsmittel (% zu trocken),
- 55 bis 80 Gew.-% mindestens einer Verbindung, die mindestens eine Funktion mit mobilem Wasserstoff trägt, ausgewählt aus den primären oder sekundären Hydroxyl-, Phenol-, primären und/oder sekundären Amin-, Carboxylfunktionen und SH-Funktion, im Verhältnis zum Gesamtgewicht der Zusammensetzung ohne Lösungsmittel (% zu trocken), und
- 35 bis 55 Gew.-%, in vorteilhafter Weise zirka 45 Gew.-%, mindestens eines organischen Lösungsmittels im

Verhältnis zum Gesamtgewicht der Zusammensetzung.

**12.** Zusammensetzung nach einem der Ansprüche 7 bis 11, wobei das/die Polyisocyanat/e aus den Produkten der Homo- oder Heterokondensation von Alcoylenediisocyanat ausgewählt ist/sind, umfassend vor allem Produkte des Typs "Biuret" und des Typs "Trimere", ja sogar "Präpolymere" mit Isocyanatfunktion, aufweisend vor allem Harnstoff-, Urethan-, Allophanat-, Ester-, Amid-, Acylharnstoff-, Isocyanurat-, Oxadiazintrion-, Imminodimer-, Imminotrimer- (Imminotriazadion), Imminooxadiazindion- (auch als asymmetrisches Trimer bezeichet), Diazetidindionfunktionen (auch als Dimer bezeichnet) und aus den Gemischen, davon enthaltend.

**13.** Zusammensetzung nach einem der Ansprüche 7 bis 12, wobei das/die Polyisocyanat/e temporär und/oder definitiv maskiert ist/sind, vorzugsweise von einem Maskierungsmittel oder einem Maskierungsmittelgemisch, aufweisend mindestens eine Funktion, die einen labilen Wasserstoff trägt.

**14.** Zusammensetzung nach Anspruch 13, wobei das Maskierungsmittel oder das Maskierungsmittelgemisch aus den Derivaten von Hydroxylamin, den Oximen, den Derivaten von Hydrazin, den Derivaten der Triazole, den Derivaten der Imidazole, den Derivaten der Phenole oder ähnlichem, den Derivaten der Amide, Imide und Lactame, den gehinderten Aminen sowie den Malonaten oder Cetoestern und den Hydroxamaten und ihren Gemischen für die temporären Maskierungsmittel und aus den Verbindungen mit Hydroxyl- oder Sulfhydrylfunktionen, vorzugsweise monofunktionalen, dem Cyclohexanol und den Verbindungen mit Carboxylsäurefunktionen und ihren Gemischen für die definitiven Maskierungsmittel ausgewählt ist.

**15.** Zusammensetzung nach einem der Ansprüche 7 bis 14, wobei die Verbindung mit reaktivem (oder mobilem) Wasserstoff, die mit dem/den Polyisocyanat/en während der thermischen Behandlung reagiert, ein Poylmer ist, enthaltend zwei oder mehrere Hydroxylfunktionen (Alkohol oder Phenol) und/oder Thiolfunktionen und/oder primäre oder sekundäre Aminfunktionen und/oder enthaltend Vorläuferfunktionen vom Typ Epoxy oder Carbonate, die durch Reaktion mit einem adäquaten Nukleophil die Hydroxylfunktionen freisetzen.

**16.** Zusammensetzung nach Anspruch 15, wobei die Verbindung mit reaktivem (oder mobilem) Wasserstoff ein Polyol ist, ausgewählt aus den Acrylpolymeren oder Polyestern oder Polyurethanen.

**17.** Zusammensetzung nach einem der Ansprüche 7 bis 16, wobei das Harz vom Typ Aminoplastisch oder Aminoplast ein Harz vom Typ Melaminformol und/oder Harnstoffformol und/oder Benzoguanaminformol ist.

**18.** Zusammensetzung nach einem der Ansprüche 7 bis 17, einhaltend eine der folgenden Bedingungen:

- ein Gewichtsverhältnis temporär/e und/oder definitiv/e maskiertes/e Polyisocyanat/e in Bezug zu der Gesamtheit der Harze [Verbindung(en) mit mobilem Wasserstoff, maskiertes/e Aminoplast- und Polyisocyanatharz/e] zwischen 5 und 80 Gew.-% inklusive, vorzugsweise zwischen 10 und 60 % inklusive und in vorteilhafter Weise zwischen 15 % und 40 % inklusive,
- eine gewichtsmäßige Menge an Dimermotiven in dem/den Vorläuferpolyisocyanat/en zwischen 0,25 und 25 % inklusive, vorzugsweise zwischen 0,5 % und 20 % inklusive, und
- ein molares Verhältnis [(maskierte und freie Isocyanatfunktionen)/Imintrimermotive) ist kleiner als 100, vorzugsweise kleiner als 90, und/oder

    - ein molares Verhältnis (Imintrimermotive/Trimermotive) größer als 3, und

- eine mittlere Funktionalität an Isocyanatfunktionen des (oder der) Vorläuferpolyisocyanats/e (vor Maskierung der Isocyanatfunktionen) im Allgemeinen von mindestens gleich 2 und höchstens gleich 10, vorzugsweise größer als 2,5 und höchsten gleich 8, in vorteilhafter Weise zwischen 2,8 und 6,5 inklusive.

**19.** Verfahren zur Herstellung einer Zusammensetzung nach einem der Ansprüche 7 bis 18, umfassend die Mischschritte der diversen Bestandteile der Zusammensetzung, wobei das Mischen unmittelbar vor dem Auftragen der Beschichtung oder auch in Form einer gebrauchsfertigen Formulierung (Einkomponentenformulierung oder auch 1k-Formulierung) oder auch in Form von Vorgemischen durchgeführt wird, die unmittelbar vor dem Gebrauch miteinander vermischt werden.

**20.** Beschichtung, umfassend eine, zwei, drei oder mehr Schichten, wovon mindestens eine Schicht, vorzugsweise die Primärschicht, eine Zusammensetzung nach einem der Ansprüche 7 bis 18 ist.

**21.** Substrat, beschichtet mit mindestens einer Polyisocyanatzusammensetzung nach einem der Ansprüche 7 bis 18.

**Claims**

**1.** Use of a composition comprising:

a) at least one polyisocyanate including at least one dimer unit and at least one polyisocyanate, identical with or different from the preceding one, including at least one iminotriazine-dione unit, said polyisocyanates having one and/or the other, preferably both following characteristics: the molar ratio (isocyanate functions/ iminotriazine-dione units) before masking is less than 100, preferably less than 90; and/or the molar ratio (iminotriazine-dione units/ trimer units) is greater than 3;
b) at least one compound bearing at least one function with mobile hydrogen selected from among primary or secondary hydroxyl functions, phenols, primary and/or secondary amines, carboxylic functions, and SH function, and
c) at least one aminoplastic resin (« aminoplast » resin) of the melamine-aldehyde type, in particular melamine-formaldehyde and/or urea-aldehyde type, in particular ureaformaldehyde, or benzoguanamine type and/or their alkoxyalkyl derivatives,

for elaborating a coating by cross-linking by a heat treatment.

**2.** The use according to claim 1, wherein the composition further comprises:

d) at least one catalyst of the reaction of the compound a) with the compound c), and/or at least one compound of the strong acid type or a latent form of said strong acid, as a catalyst of the reaction of the melamine and/or urea compounds or of their derivatives with true urethane or carbamate functions.

**3.** The use of a composition according to any of the preceding claims, wherein said composition acts a curing agent for the primary compound of a coating.

**4.** The use of a composition according to any of the preceding claims, for elaborating a coating for a first original fitting.

**5.** The use according to any of claims 1 to 3, for rework touch-up operations.

**6.** The use according to any of the preceding claims, wherein the polyisocyanate composition allows the preparation of a coating under the aspect of a one-component formulation (1K), or else a two-component formulation (2K) or further multi-component formulation.

**7.** A composition comprising:

a) at least one polyisocyanate including at least one dimer unit and at least and at least one polyisocyanate, identical with or different from the preceding one, including at least one iminotriazine-dione unit, said polyisocyanates having one and/or the other, preferably both following characteristics:

- the molar ratio (isocyanate functions/ iminotriazine-dione units) before masking is less than 100, preferably less than 90; and/or
- the molar ratio (iminotriazine-dione units/ trimer units) is greater than 3;

b) at least one compound bearing at least one function with mobile hydrogen selected from among primary or secondary hydroxyl functions, phenols, primary and/or secondary amines, carboxylic functions, and SH function, and
c) at least one aminoplastic resin (« aminoplast » resin) of the melamine-aldehyde type, in particular melamine-formaldehyde and/or urea-aldehyde type, in particular ureaformaldehyde, or benzoguanamine type and/or their alkoxyalkyl derivatives.

**8.** The composition according to claim 7, further comprising:

d) at least one catalyst of the reaction of the compound a) with the compound c), and/or at least one compound

of the strong acid type or a latent form of said strong acid, as a catalyst of the reaction of the melamine and/or urea compounds or of their derivatives with true urethane or carbamate functions.

**9.** The composition according to any of claims 7 or 8 comprising:

- at least one polyisocyanate containing a weight amount of dimer units comprised between 0.25% and 25%, preferably between 0.5% and 20% based on the total mass of the polyisocyanate(s), said dimer units being connected to one or several isocyanurate units, by hydrocarbon chains, preferably alkyl chains,
- at least one polyisocyanate identical with or different from the preceding one containing at least one iminotriazine-dione unit,
- optionally at least one polyisocyanate identical with or different from the preceding ones containing a true dimer;
- at least one compound bearing at least one function with mobile hydrogen such as hydroxyl functions, and/or primary and/or secondary amines, and/or SH functions;
- at least one organic solvent;
- at least one aminoplast resin of the melamine-formaldehyde and/or urea-aldehyde, or benzoguanamine type and/or their alkoxyalkyl derivatives; and
- optionally at least one catalyst for reaction of polyurethanes and/or at least one strong acid catalyst for the reaction of melamine and/or urea compounds or their derivatives with true urethane or carbamate functions.

**10.** The composition according to any of claims 7 to 9, wherein the dimer units are connected to one or several isocyanurate units in the form of sequences illustrated by the following formulae (I) to (V) and mixtures thereof.

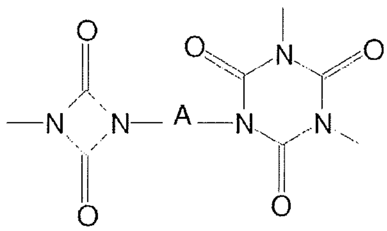

(I)

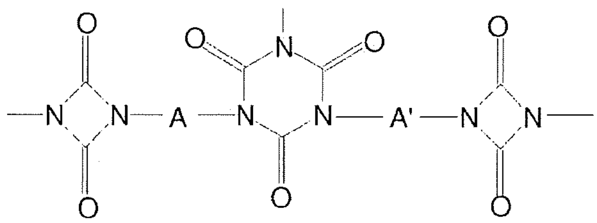

(II) ;

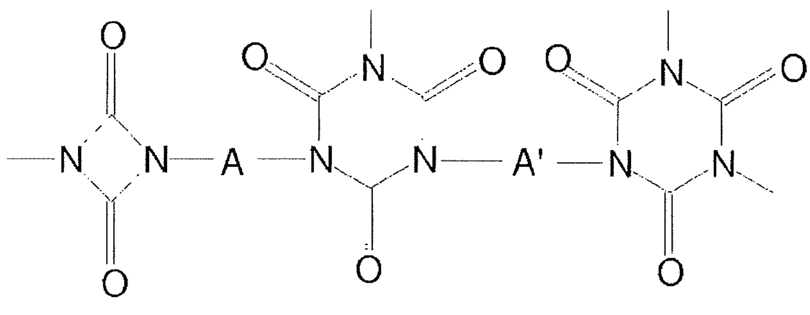

(III) ;

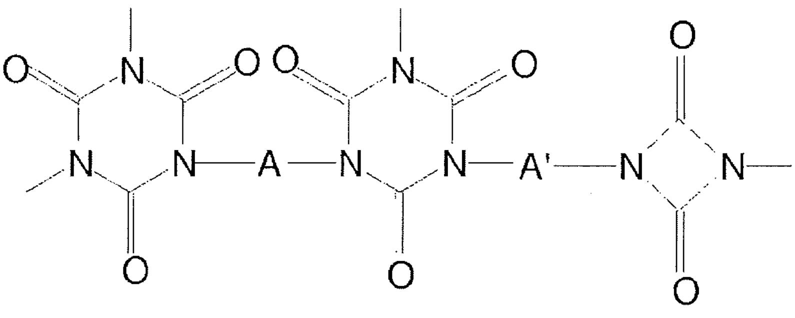

(IV) ;

and

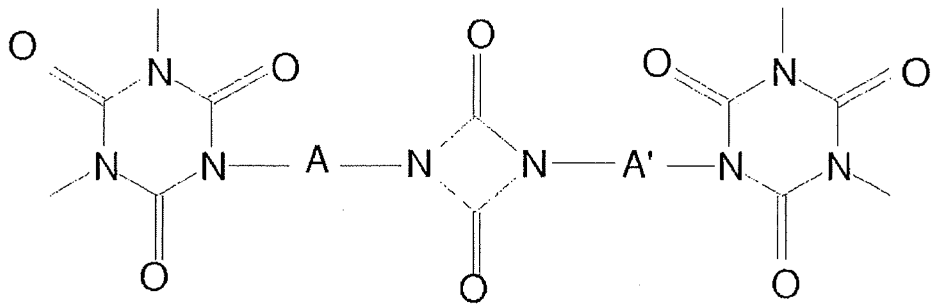

(V),

wherein A and A' either identical or different represent the remainders of an isocyanate monomer compound after removal of two isocyanate functions, and preferably A and A' each represent a linear, branched or cyclic bivalent radical containing from 1 to 20 carbon atoms, preferably from 2 to 12 carbon atoms, advantageously from 2 to 8 carbon atoms, for example 6 carbon atoms, and further containing optionally 1, 2 or 3 isocyanate functions.

**11.** The composition according to any of claims 7 to 10, comprising:

- from 5% to 20% by weight of at least one polysocyanate, based on the total weight of the composition without any solvent (dry %);
- from 15% to 25% by weight of at least one aminoplast resin, based on the total weight of the composition without any solvent (dry %);
- from 55% to 80% by weight of at least one compound bearing at least one function with mobile hydrogen selected from among primary or secondary hydroxyl functions, phenols, primary and/or secondary amines, carboxylic functions, and SH function, based on the total weight of the composition without any solvent (dry %); and
- from 35% to 55%, advantageously about 45%, by weight of at least one organic solvent, based on the total weight of the composition.

**12.** The composition according to one of claims 7 to 11, wherein the polyisocyanate(s) is(are) selected from among homo- or hetero-condensation of alkoylene-di-isocyanate, notably comprising products of the « biuret » or « trimer type or even « prepolymers » with an isocyanate function, notably including urea, urethane, allophanate, ester, amide, acylurea, isocyanurate, oxadiazinetrione, imino-dimer, imino-trimer (iminotriazadione), imino-oxadiazinedione (further called asymmetrical trimer), diazetidinedione (further calleddimer) functions and from mixtures containing them.

**13.** The composition according to any of claims 7 to 12,wherein the polyisocyanate(s) is(are) temporarily or definitively masked, preferably with a masking agent or a mixture of masking agents having at least one function beaing a labile hydrogen.

**14.** The composition according to claim 13, wherein the masking agent or a mixture of masking agents are selected from among hydroxylamine derivatives, oximes, hydrazine derivatives, triazole derivatives, imidazole derivatives, phenol derivatives or assimilated derivatives, derivatives of amides, imides and lactams, hindered amines, as well as malonates or ketoesters or hydroxamates and mixtures thereof, for the temporary masking agents and from among the compounds with hydroxyl or sulfhydryl functions, preferably monofunctional, cyclohexanol, and compounds with carboxylic acid functions and mixtures thereof, for so-called definitive masking agents.

**15.** The composition according to one of claims 7 to 14, wherein the compound with reactive (or mobile) hydrogen which reacts with the polyisocyanate(s) during a heat treatment is a polymer containing two or more hydroxyl functions (alcohol or phenol) and/or thiol functions and/or primary and secondary amine functions and/or precursor functions of the epoxy or carbonate type which, by reaction with an adequate nucleophilic agent, free the hydroxyl functions.

**16.** The composition according to claim 15, wherein the compound with reactive (or mobile) hydrogen is a polyol selected from among acrylic polymers or polyesters or polyurethanes.

**17.** The composition according to any of claims 7 to 16, wherein the resin of the aminoplastic or aminoplast type is a resin of the melamine-formaldehyde or ureaformaldehyde and/or benzoguanamine-formaldehyde type.

**18.** The composition according to one of claims 7 to 17, observing one of the following conditions:

- a weight ratio of temporary and/or definitive masked polyisocyanates relatively to the whole of the resin(s)[compound(s) with mobile hydrogens, aminoplast resin(s) and masked polyisocyanate(s)] comprised between 5 and 80% by weight preferably comprised between 10 and 60% and advantageously comprised between 15 and 40%;
- a weight amount of dimer units in the precursor poyisocyanate(s) comprised between 0.25 and 25%, preferably comprised between 0.5% and 20%; and
- a molar ratio [(masked and free isocyanate functions)/(iminotriazinedione units)] is less than 100, preferably less than 90; and/or - a molar ratio (iminotriazinedione units)/ trimer units) greater than 3; and
- an average functionality of isocyanate functions of the precursor polyisocyanate(s) (before masking of the isocyanate functions) generally at least equal to 2 and at most equal to 10, preferably greater than 2.5 and at most equal to 8, advantageously comprised between 2.8 and 6.5.

**19.** The method for preparing a composition according to any of claims 7 to 18, comprising the steps for mixing the diverse components of said composition, said mixtures being achieved just before application of the coating, or else further as a formulation ready-for-use (one-component formulation or further formulation 1K) or else further as premixes which will be mixed together just before use.

**20.** A coating comprising one, two or three or more layers, including at least one layer, preferably the primary coat, is ac composition according to one of claims 7 to 18.

**21.** A substrate coated with at least one polyisocyanate composition according to any of claims 7 to 18.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2822828
- FR 2837820


### Littérature non-brevet citée dans la description


- **Z. WICKS.** *Prog. Org. Chem.,* 1975, vol. 3, 73
- *Prog. Org. Chem.,* 1989, vol. 9, 7
- **PETERSEN.** Justus Liebigs. *Annalen der Chemie,* 1949, vol. 562, 205
- **GOTTFRIED W. EHRENSTEIN ; FABIENNE MONTAGNE.** Matériaux polymères, structures, propriétés et applications. Hermès Science, 2000
- **MICHAEL SZYCHER.** Handbook of Polyurethanes. CRC Press, 1999
- **D. STOYE ; W. FREITAG.** Resins for coatings, Chemistry, Properties and Applications. Hanser, 1996
- *Eurocoat,* 1997, 505-515
- Specialty Resins, creating the solution together. Akzo Nobel Resins, Février 2001